# EUROPEAN PATENT APPLICATION

(11) **EP 2 163 363 A2**
(43) Date of publication of application: **17.03.2010**
(21) Application number: 09252166.5
(22) Date of filing: 11.09.2009
(51) Int. Cl.: B27G 19/04, B27G 3/00, B23Q 11/00

(54) **Blade guard for power tool having an evacuation system**

(30) Priority: 11.09.2008 US 209177
(71) Applicant: Techtronic Power Tools Technology Limited, Road Town, Tortola (VG)
(72) Inventor: Goddard, Jay Aaron, Easley, South Carolina 29640 (US)
(74) Representative: Holmes, Matthew Peter

(57) **Abstract**

A blade guard is configured to surround a rotatable cutting blade (930). The blade guard includes an arcuate body (950) mounted to surround a portion of an outer circumferential edge of the cutting blade, wherein the arcuate body (950) is fixed with respect to the rotatable blade. A plenum (953) is disposed upon the body and configured to provide fluid communication between a cutting zone within the body and a auction source. An aperture (958) is defined in the body proximate the cutting blade, the aperture disposed proximate a location where the cutting blade exits a workpiece being cut.

## Description

### FIELD OF THE INVENTION

The claimed invention relates generally to a blade guard for use with a power tool that is used in association with a debris evacuation system, and more particularly, but not by way of limitation, to a blade guard for use with a portable, handheld power tool suited to cutting substrates that generate significant amounts of airborne particulates when cut.

### BACKGROUND

Portable handheld power tools are often used for a variety of construction tasks. Such tools often employ an electrical motor and an operational mechanism, such as a rotatable blade, to cut, drill, plane or otherwise operate upon a workpiece.

While operable, such tools have nevertheless been found to have limited utility in certain types of applications. For example, using a conventional power tool (e.g. a circular saw) to cut certain types of substrates, such as concrete board or drywall, can generate significant amounts of dust or other airborne particulates. The dust and particulate matter that is created while cutting substrates is problematic for several reasons. Initially, the dust and other particulate matter often creates a large mess that must be cleaned up after the work is complete at the jobsite. The cleaning process not only takes time, but because the airborne dust does not immediately settle on surfaces at the worksite, it is not often possible to immediately clean a work area after a substrate is cut. Further, many types of concrete board includes respirable crystalline silica, which may be a cause of cancer, silicosis, and has been linked to other diseases with accumulated and extended intake of airborne dust while breathing.

To avoid issues relating to the generation of such particulates, users often employ hand actuated cutting devices, such as manual saws or shears, in an effort to cut such substrates. While operable, these and other manual methods are time consuming and inefficient, and can produce less than optimal cut geometries, accuracy and finish.

There is accordingly a continued need for improvements in the manner in which certain types of materials prone to generate particulates can be processed by a user in a fast and efficient manner without the limitations set forth above. It is to these and other improvements that preferred embodiments of the present invention are generally directed.

### SUMMARY OF THE INVENTION

According to a first representative aspect of the invention there is provided a blade guard disposed upon a power tool having a cutting blade comprises a generally arcuate body fixed to a housing of the power tool, the body surrounding a portion of the cutting blade; and a plenum at least partially disposed in concert with the body and fixably disposed thereon, the plenum including an arcuate portion disposed substantially coaxially with the cutting blade.

Preferably, the plenum comprises two mated clam shell halves.

Preferably, the two clam shell halves include a portion that encloses a portion of a circumferential edge of the cutting blade.

Preferably, the clam shell halves mate at a first edge proximate a top portion of the plenum, and a second edge proximate a bottom portion of the plenum.

Preferably, the blade guard further comprises an aperture defined in the second edge.

Preferably, the aperture is defined in apportion of the second edge where the two clam shell halves do not make contact proximate the cutting blade.

Preferably, the aperture defined proximate a location where a leading edge of the cutting blade exits a work piece during operation.

Preferably, the aperture is defined proximate a leading edge of the cutting blade.

Preferably, a portion of the cutting blade extends through the aperture and into the plenum.

Preferably, the cutting blade extends through the aperture as it passes upward through a slot in a base plate.

Preferably, the aperture is disposed above a base plate of the housing.

Preferably, the tangent line aligned with an outer circumferential edge of the cutting blade at a point of normal contact with a workpiece extends through the aperture and into the plenum.

Preferably, the plenum includes an extended portion fluidly connected to the arcuate portion, wherein the extended portion is configured to establish fluid communication with a suction source.

Preferably, the blade guard further comprises a second arcuate body movably disposed upon the body, the second body biased to surround a second portion of the cutting blade.

Preferably, the second body is movable to a retracted position that exposes a portion of the cutting blade extending below a base plate of the housing.

According to a second representative aspect of the invention there is provided a blade guard configured to surround a rotatable cutting blade comprises an arcuate body mounted to surround a portion of an outer circumferential edge of the cutting blade, wherein the arcuate body is fixed with respect to the rotatable blade; a plenum disposed upon the body and configured to provide fluid communication between a cutting zone within the body and a suction source; and an aperture defined in the body proximate the cutting blade, the aperture disposed proximate a location where the cutting blade exits a workpiece being cut.

Preferably, the aperture is disposed such that a portion of the outer circumferential edge of the cutting blade extends through the aperture and into the plenum.

Preferably, the cutting blade is rotatable with respect to the body such that the portion of the outer circumferential edge of the cutting blade extending through the aperture continuously changes as the cutting blade rotates.

Preferably, the plenum includes an arcuate portion that is coaxially mounted with respect to the cutting blade.

Preferably, the plenum comprises an inner portion that surrounds a portion of the outer circumferential edge of the cutting blade, and the aperture is defined by the absence of the inner portion of the plenum proximate the cutting blade.

Further representative aspect of the invention will become apparent from the following description which is given by way of example only.

### BRIEF DESCRIPTION OF THE DRAWINGS

FIG. 1 is a side view of a hand held power tool.

FIG.2 is a left side view of the hand held power tool of FIG. 1.

FIG. 3 is a perspective view of the hand held power tool of FIG. 1 with a portion of the blade guard and plenum removed.

FIG. 4 is the view of FIG. 1 with a portion of the blade guard and plenum removed.

FIG. 5 is another modified view of FIG. 1, with a portion of the blade guard and plenum removed.

FIG. 6 is a bottom cross-sectional view of the hand held power tool of FIG. 1 showing the dust flow path through the tool.

FIG. 7 is a right side view of the shroud and plenum of the power tool of FIG.1.

FIG. 8 is a left perspective view of the power tool of FIG. 1, which a portion of the housing removed.

FIG. 9 is a rear perspective view of the power tool of FIG. 1 with a portion of the housing and plenum removed.

FIG. 10 is a perspective view of a collection apparatus fluidly connected with the power tool of FIG. 1.

FIG. 11 is a perspective view of the cap of the collection apparatus of FIG. 10.

FIG. 12A is a first perspective view of another hand held power tool.

FIG. 12B is an alternate perspective view of the hand held power tool of FIG 12A.

FIG. 12C is a side view of the hand tool of FIG. 12A.

FIG. 12D is a rear perspective view of the hand tool of FIG. 12A with a portion of the impeller assembly disassembled.

FIG. 12E is a bottom perspective view of the hand held power tool of FIG. 12A.

FIG. 13 is a top schematic view of the hand held power tool of FIG. 12A.

FIG. 14 generally illustrates relevant portions of a gear assembly of the hand held power tool of FIG. 12A.

FIG. 15 is an elevational, partial-cross sectional simplified depiction of a cutting blade assembly set forth in FIG. 13.

FIG. 16 shows portions of FIG. 15 in greater detail.

FIG. 17 provides an elevational, partial-cross sectional simplified depiction of an impeller assembly of FIG. 13.

FIG. 18 is a schematic side view of an alternate hand held power tool.

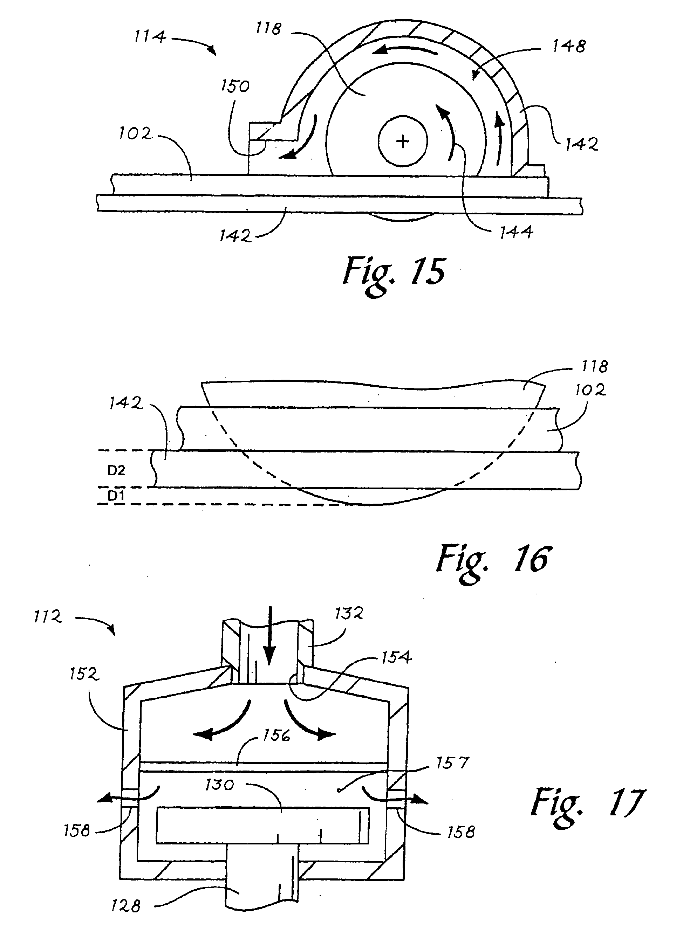

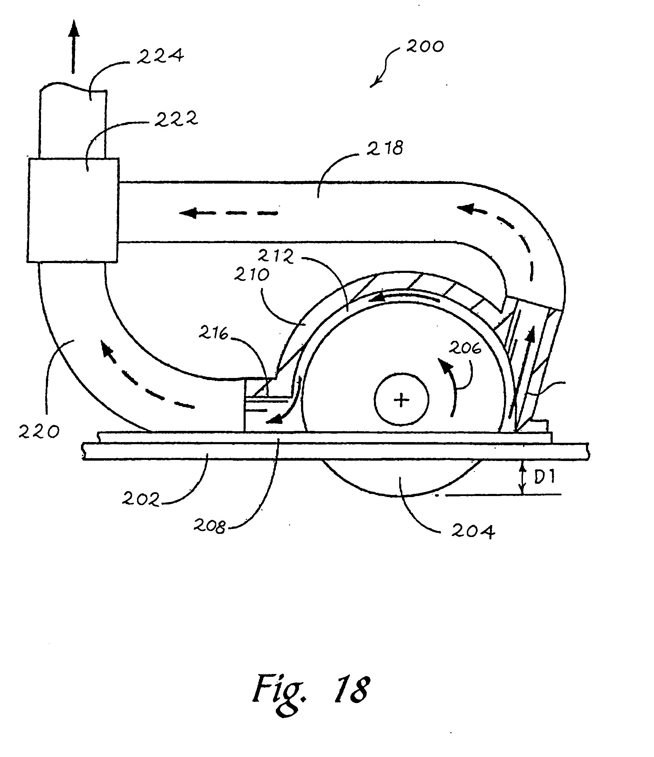

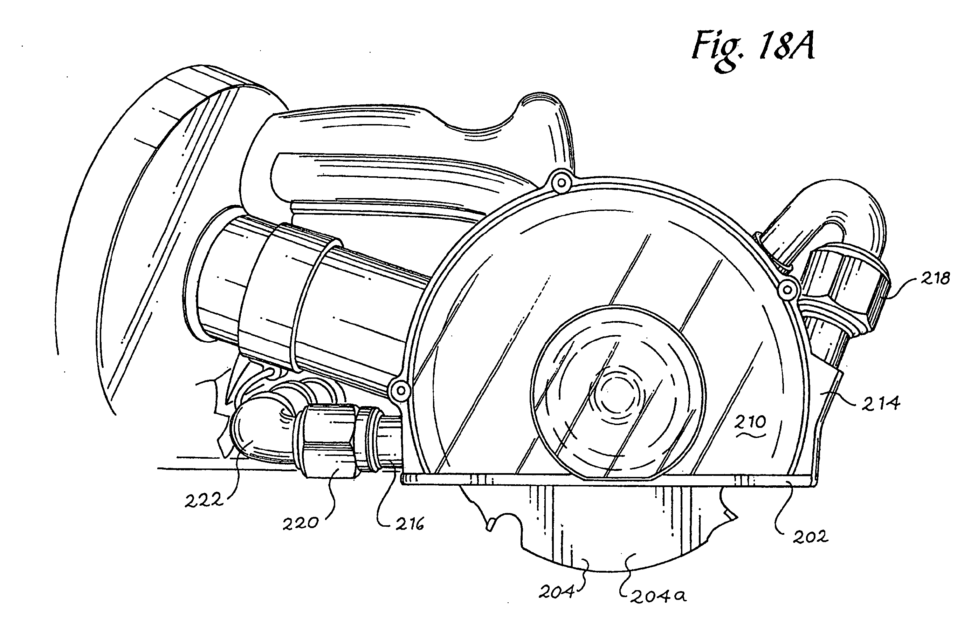

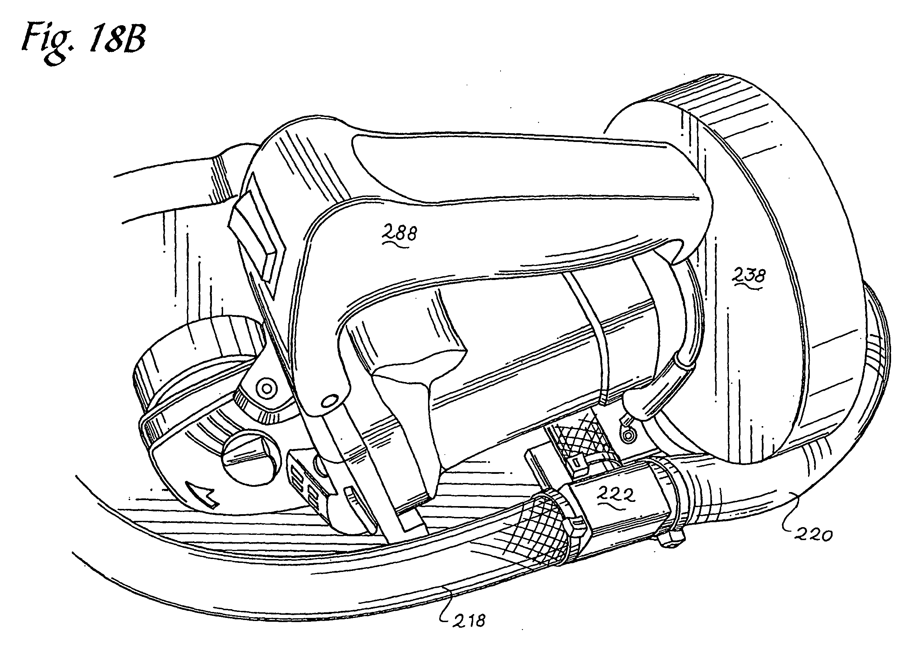

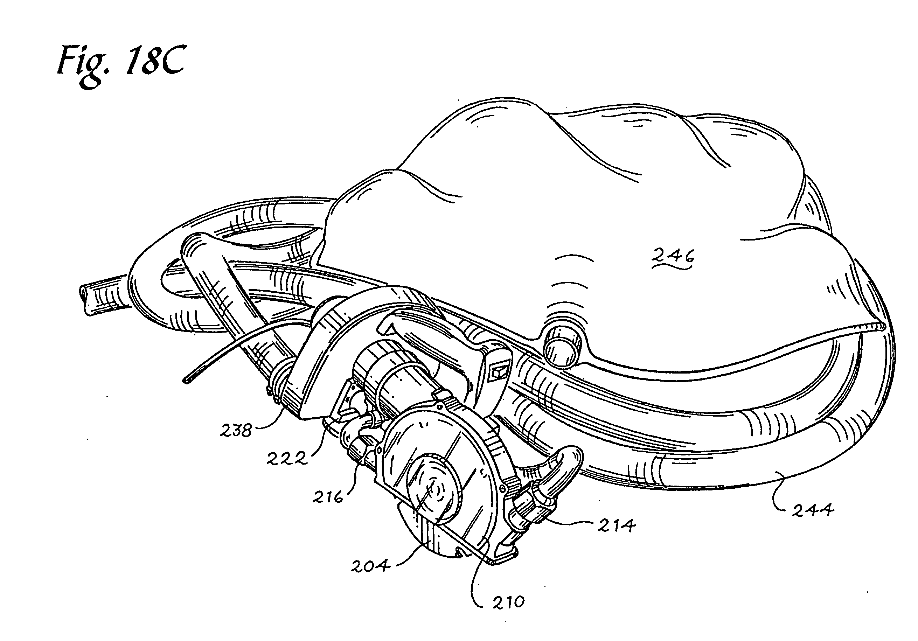

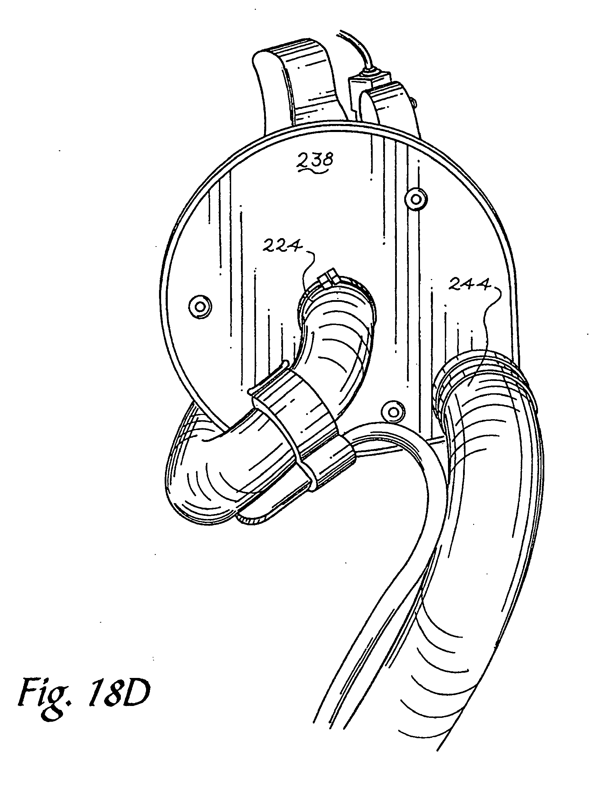

FIG. 17A is another side view of the tool of FIG. 18.

FIG. 18B is a rear perspective view of the tool of FIG 18.

FIG. 18C is a front perspective view of the tool of FIG. 18.

FIG. 18D is a rear view of the tool of FIG. 18.

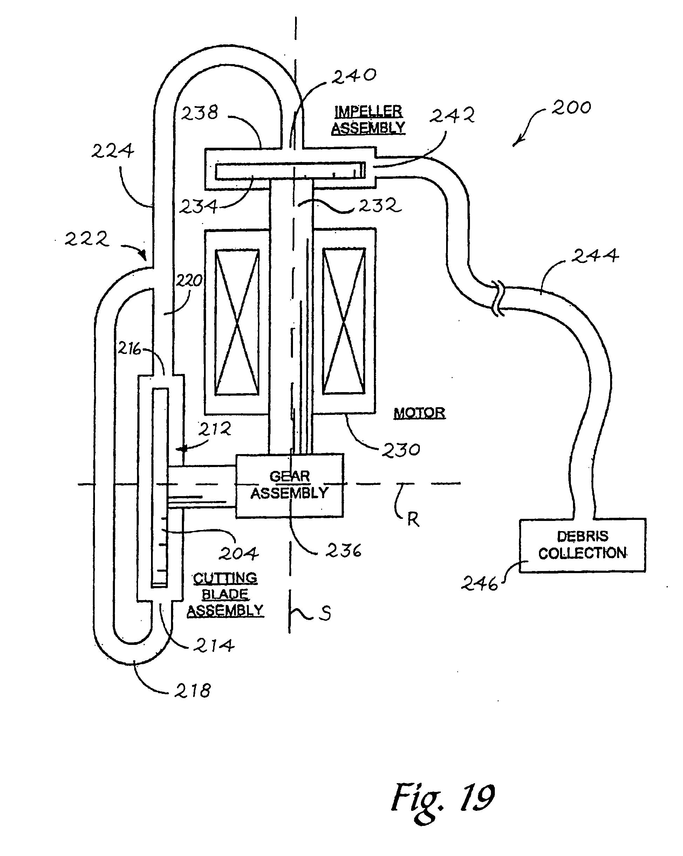

FIG. 19 is schematic top view of the power tool of FIG. 18.

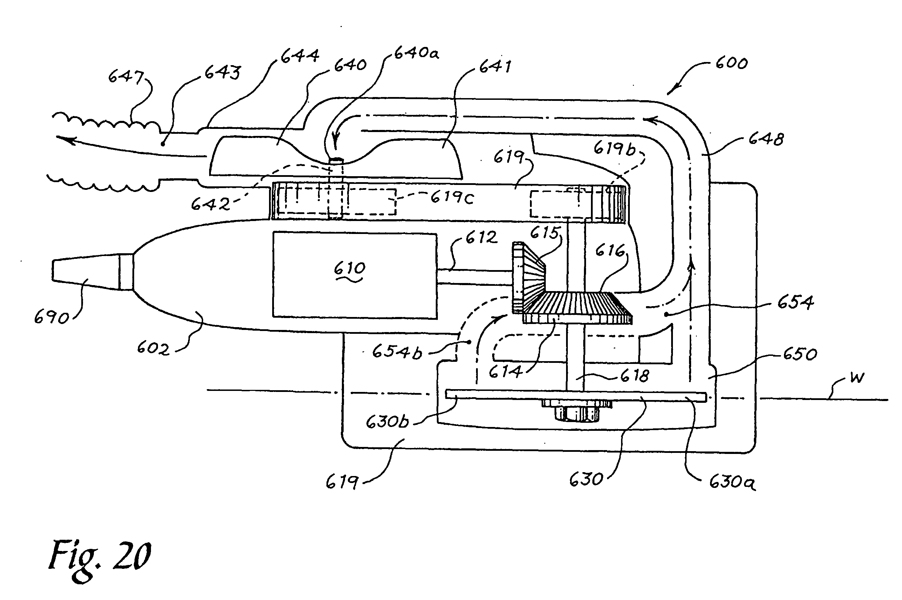

FIG. 20 is a top schematic view of an alternate power tool with an impeller rotated with a belt drive transmission.

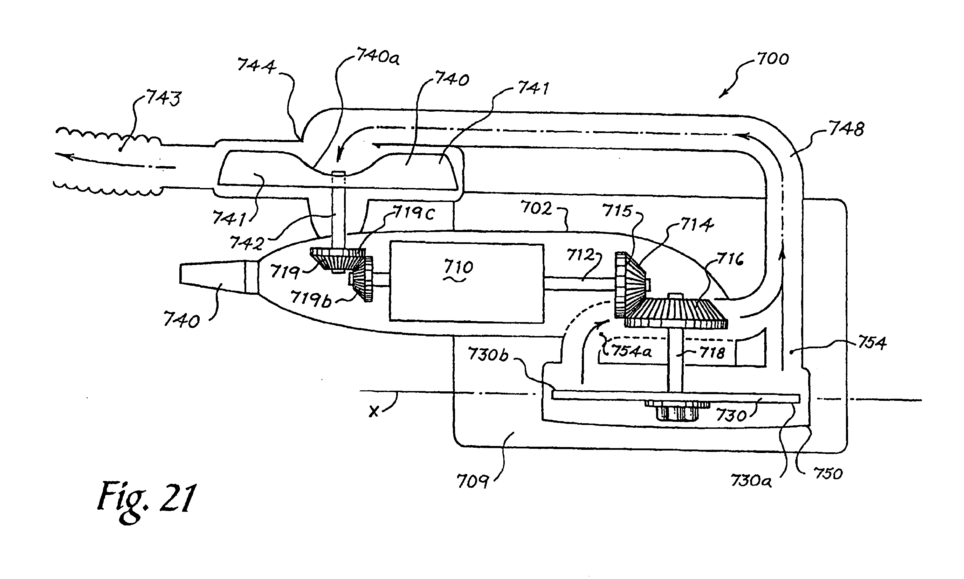

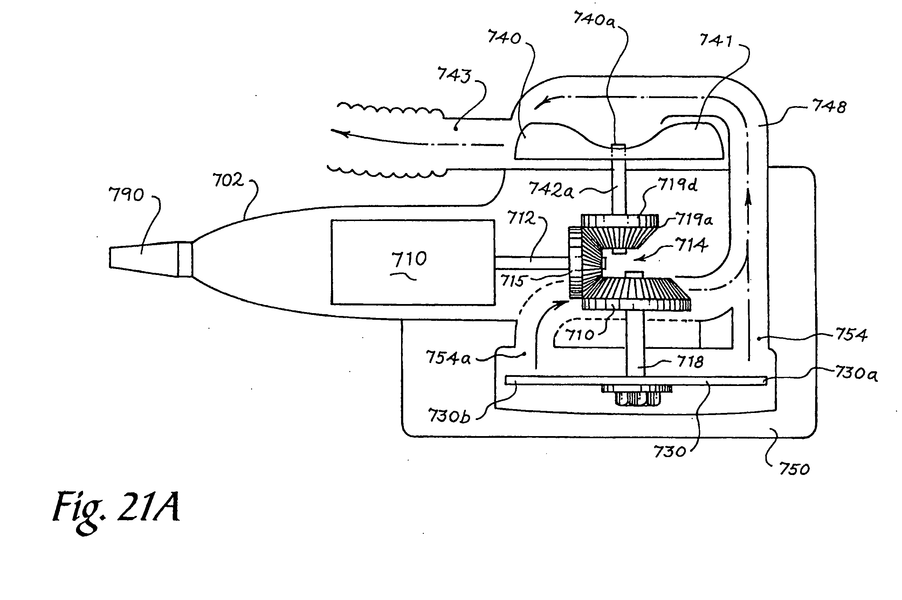

FIG. 21 is a top schematic view of an alternate power tool with an impeller rotated with a gear drive transmission.

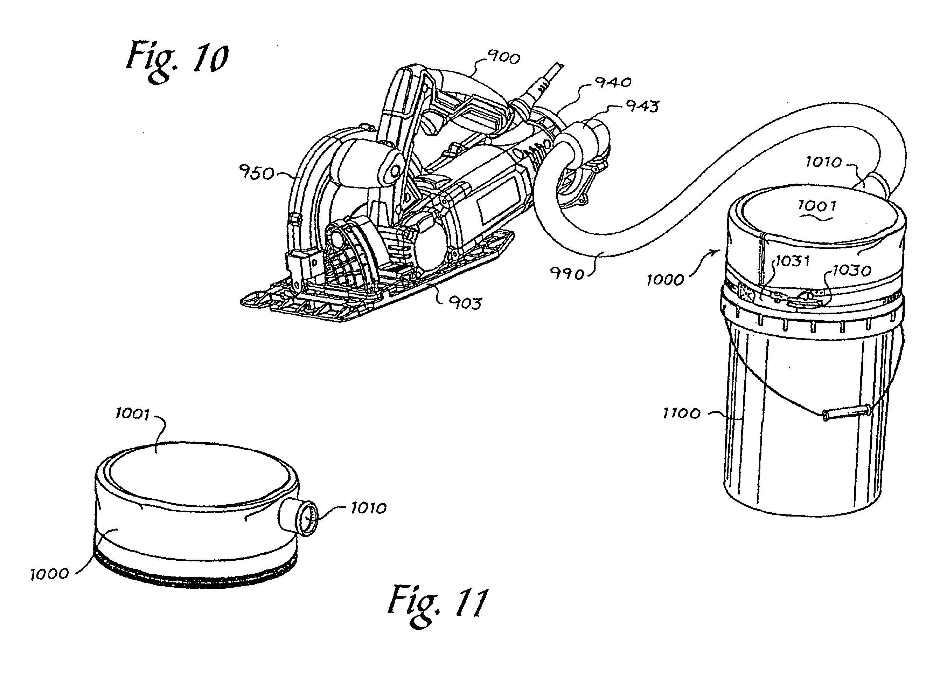

FIG. 21a is the view of the power tool of FIG. 10 with the impeller driven from an alternate gear drive transmission.

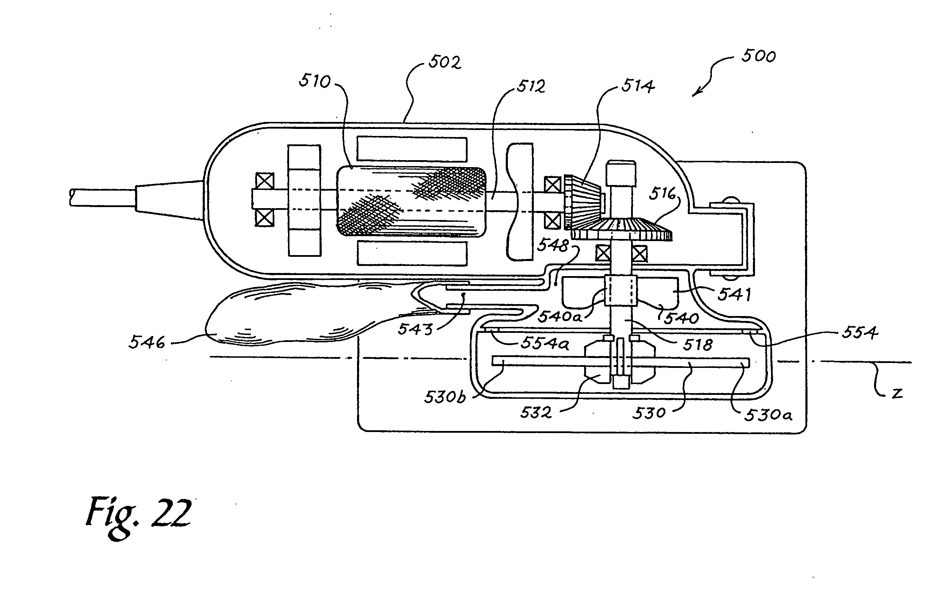

FIG. 22 is a top schematic view of a power tool with an impeller provided on the output shaft.

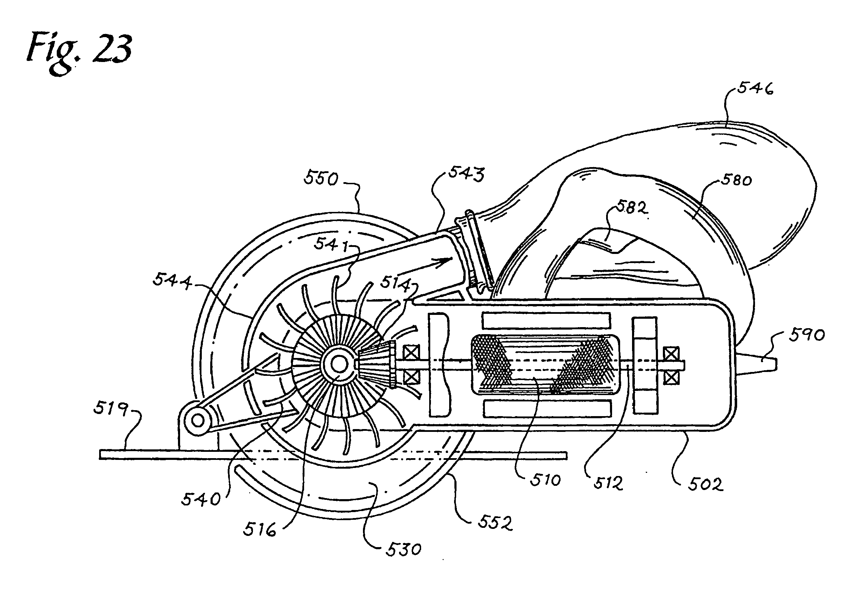

FIG. 23 is a right side view of the tool of FIG. 22.

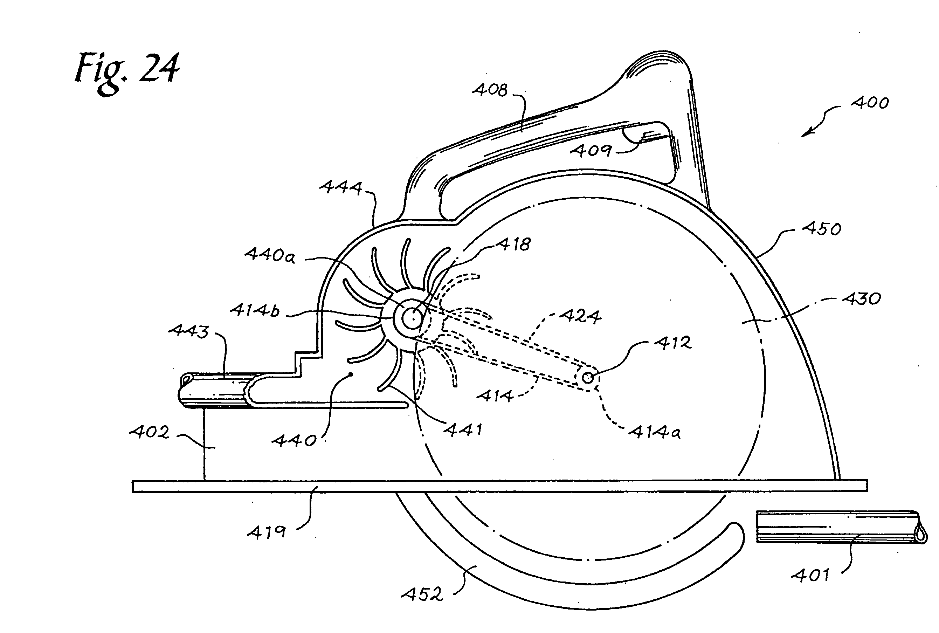

FIG. 24 is a side view of an alternate power tool with the impeller mounted on the motor shaft.

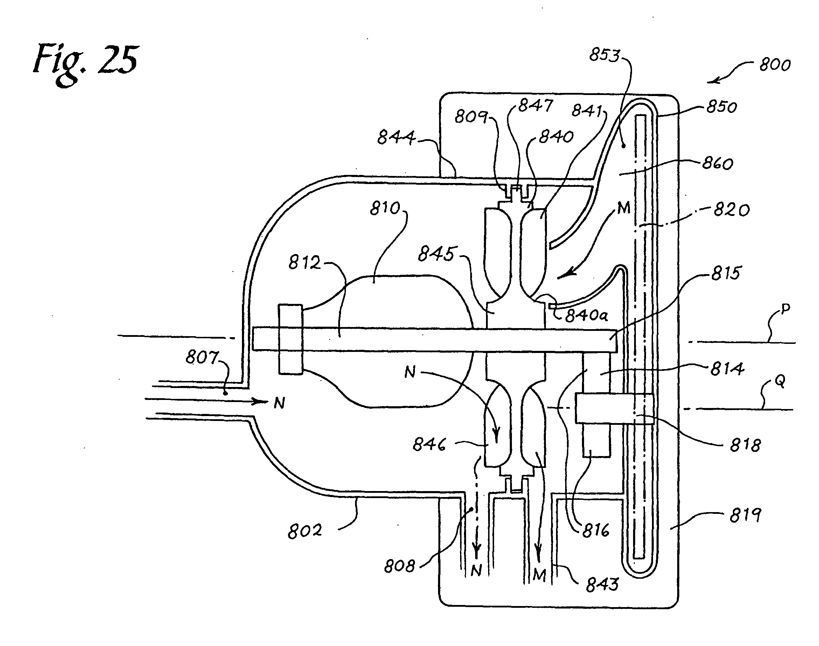

FIG. 25 is a top schematic view of another alternate power tool.

### DETAILED DESCRIPTION OF THE PREFERRED EMBODIMENTS

Preferred embodiments of the present invention are generally directed to an apparatus a blade guard used in association with a cutting tool having a debris evacuation system for collecting debris during cutting of a substrate. The cutting tool may be used to cut substrates such as fiber cement board, wood or wood products, composite decking boards, medium density fibreboard (MDF), rock or natural or engineered mineral based materials (e.g. granite), metal, plaster, fiber glass, and other similar materials that create significant dust and debris when cut.

The tool may be a portable hand tool with a motor, an impeller and a cutting blade. The impeller is axially mounted to a first end of the motor, and the cutting blade is transversely mounted to a second end of the motor opposite the first end. Preferably, the impeller and the cutting blade are concurrently rotated by the motor at different, respective first and second rotational rates. The impeller is further configured to direct and urge particulates generated by the cutting blade to a debris collection assembly.

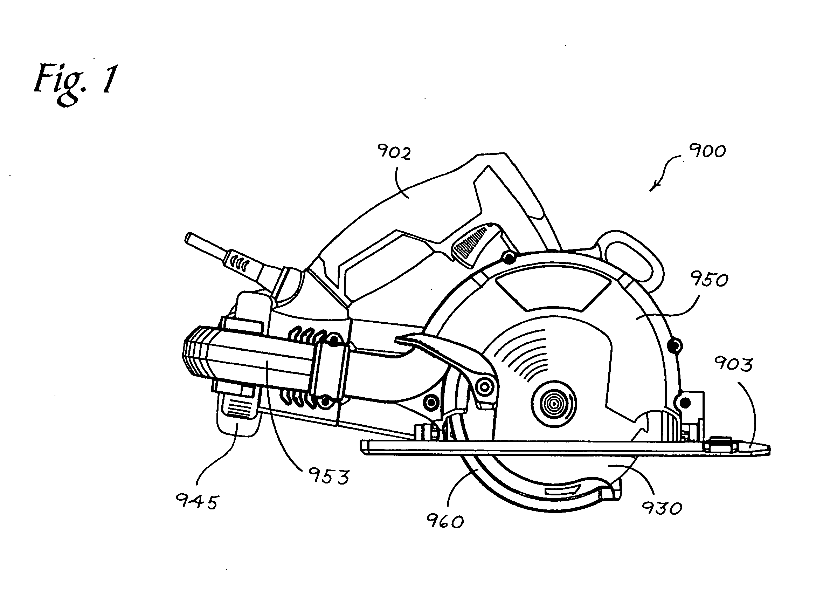

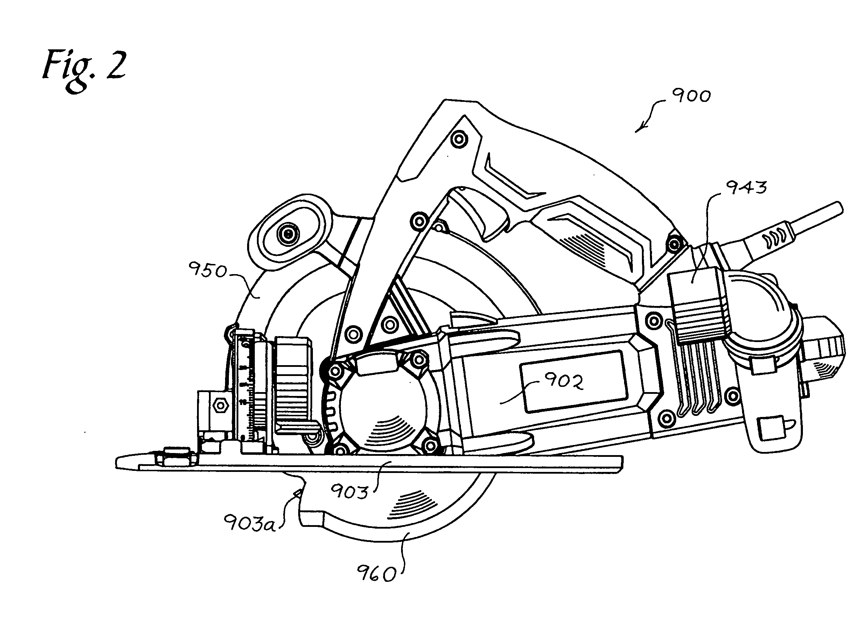

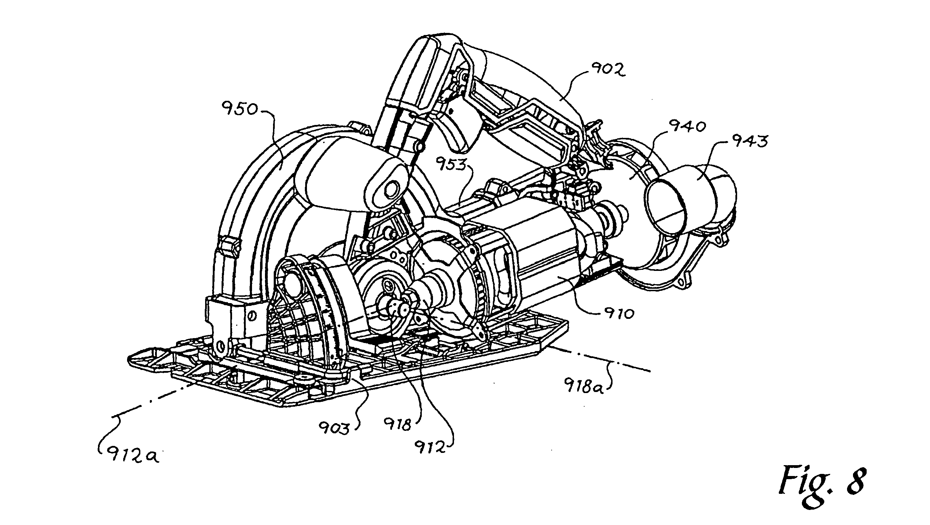

A first representative embodiment of a blade guard used in associate with a tool having a debris evacuation system is depicted in FIGS. 1-11. In this embodiment, the blade guard is configured for use with a hand held rotary tool 900. For example, the tool 900 is shown herein as a circular saw, but those of skill in the art will understand that the components associated with this tool described herein an be successfully implemented with a plurality of tools, such as a tile cutter, an angle grinder, a disc sander or buffer, or other hand held or otherwise manipulated tools with rotary cutting (or working) blades. One of ordinary skill in the art would appreciate that the debris evacuation system can be configured for use with various types of cutting tools that are used for cutting substrates that create airborne particulates during cutting. Further, it will be understood by those skilled in the art that other debris evacuation systems can be configured for use with tools incorporating a blade guard of the present invention.

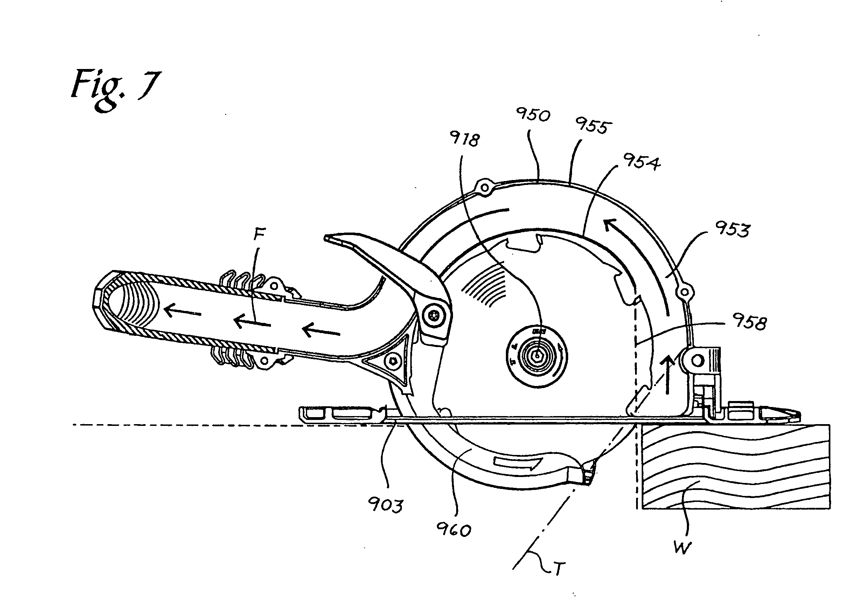

Figure 7 illustrates a cutaway view of the blade guard. Here the blade guard is associated with a cutting blade 930 of the hand held rotary tool 900. The cutting blade 930 is substantially enclosed within a fixed upper blade guard 950 that encloses the entire circumferential edge of the portion of the cutting blade 930 above the base plate 903. The upper blade guard 950 prevents a user from inadvertently contacting the upper and side portions of the rotating cutting blade 930.

The blade guard 950 further defines a plenum 953 that is disposed coaxially around the blade guard 950, but segregated from a cutting volume 931 disposed within the inner volume of the blade guard 950 by an arcuate wall 954. The plenum 953 is fluidly connected with the cutting volume 93 of the blade guard 950 through an aperture 958. The aperture 958 is disposed in the portion of the blade guard 950 located above the base plate 903 proximate the forward end of the slot 903a. The blade guard 950 may be formed integrally with the housing 902 in at least a portion rearward of the blade guard 950. In some embodiments, the fixed blade guard 950 (and plenum 953) are integral with the housing as well.

The plenum 953 follows an arcuate path around at least a majority of the blade guard 950, in a coaxial relationship with the cutting blade 930. The plenum 953 extends outward from the blade guard 950 and toward the debris evacuation system at a point proximate a rear portion of the blade guard 950. The extending portion of the plenum 953 may be formed monolithically with the blade guard 950, or in other embodiments, may be a tubular structure that is connected to a plenum outlet feature in the blade guard 950. With this configuration, the upper blade guard 950 directs the flow (F) of debris from the forward end of the blade 930, where a majority of debris originates, around an outer edge of the blade 930, towards a rear end of the tool 900, and directly into a remote container, therefore substantially avoiding contact between the operator and the debris.

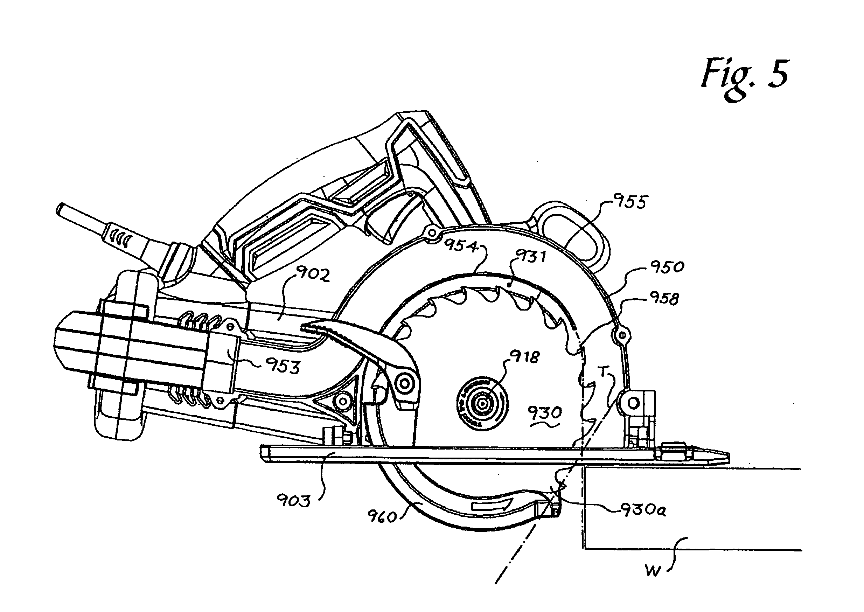

In some embodiments, the blade guard 950 (including the plenum 953) is constructed from two clamshell halves that define the outer volume thereof. The two clamshell halves of material that form the plenum 953 are connected (or abutted) together at an upper seam 955 and a lower seam 954, which each form the respective upper surface and lower surface of the plenum 953, respectively. As best shown in FIG. 5, the lower seam 954 is provided along a portion of the circumference of the saw blade 930, but is not present proximate the forward edge of the cutting blade 930 disposed directly above the base plate 903. The absence of the lower seam 954 proximate the forward portion of the saw blade 930 proximate the base plate 903 defines the aperture 958, and allows the blade guard 950 and plenum 953 to be configured such that the one or more teeth 930a of the saw blade 930 extend through the aperture 958 and into the plenum 953, which increases the amount of dust and debris that is pulled into the plenum 953 during operation. FIGs. 5 and 7 includes a dashed line that extends from the lower seam 954 that graphically depicts the toothed portion 930a of the saw blade 930 extending through the aperture 958 and into the plenum 953.

The aperture 958 and blade guard 950 are each disposed such that a portion of the cutting blade 930 directly above the forward end of the slot in the base plate 903 extends through the aperture 958 and into the plenum 953. In some embodiments, one or more teeth 930a of the cutting blade 930 extend through the aperture 958 and into the plenum 953. In some embodiments, the aperture 958 and plenum 953 are configured such that a tangent line T extending from the outer circumference of the cutting blade 930 disposed just below the base plate 903 extends through the aperture 958 and into the plenum 953.

In other embodiments, the blade guard 950 may be constructed from two or more clamshell halves at various seams. The blade guard 950 may include a lower portion that defines a portion of the blade guard 950 directly above and proximate to the outer circumferential edge of the cutting blade 930. The lower portion includes an opening, which defines an aperture, similar to aperture 958, which is disposed just above the base plate 903 proximate to the front end of the cutting blade 930. The aperture allows for fluid communication from the cutting zone to the plenum 953 therethrough. In this embodiment, like aperture 958 discussed herein, a portion of the outer circumferential edge of the cutting blade 930 may extend through the aperture and into the plenum 953.

In one embodiment, the hand held rotary tool 900 includes a housing 902 that supports and fixes a motor 910 with a motor shaft 912 extending therefrom, a torque transmission system (not shown) is disposed between the motor shaft 912 and output shaft 918 to transfer torque therebetween. An output shaft 918 engages an output of the transmission and a cutting blade 930 is removeably received upon the output shaft 918. The cutting blade 930 is generally circular and includes a plurality of cutting teeth 930a. The cutting blade 930 may be formed of a polychrystaline diamond construction, though other materials such as carbide can readily be used. A 5-3/8 inch diameter multi-tooth blade is a particularly advantageous size, although other sizes including larger diameters of around 7 inches or more, and smaller diameters of around 4 inches or less, can also be used as desired. For example, in some embodiments a 5.0 inch blade may be used. The blade may be configured with carbide teeth or with other materials. Further, the cutting blade 930 may be fabricated or worked with various known techniques to improve or affect the hardness, strength, ability to retain a sharp edge of the cutting blade 930.

A portion of the cutting blade 930 extends through a slot 903a in a base plate 903 that is fixed (either movably fixed or rigidly mounted) to the housing 902 and is the surface upon which the tool 900 contacts the substrate or work piece to be cut. In some embodiments, the base plate 903 may be pivotable about the housing 902 such that the cutting depth may be adjusted by modifying the amount of the cutting blade 930 extending below the slot 903a.

The motor 910 may be an alternating current (AC) motor. The motor 910 is preferably supplied with alternating current (AC) power via cord and user activated on-off switch disposed upon the housing. The motor 910 can alternatively be supplied by direct current (DC) power such as from an associated battery pack. Although not shown, a user activated switch can be incorporated with the handle so that pressure is required from the hand of a user to activate the motor. In some embodiments, the motor 910 control system may include an interlock that requires a second switch or button to be pressed to initially start the motor 910. The second operator may be ergonomically operable with a second hand to prevent spurious and unintended operations of the motor 910. The interlock may be configured such that the second operator may be released after the motor 910 starts to allow the tool to be held by two hands during use. A handle may be provided on the housing 902 to allow the user to move and operate the tool with a single hand.

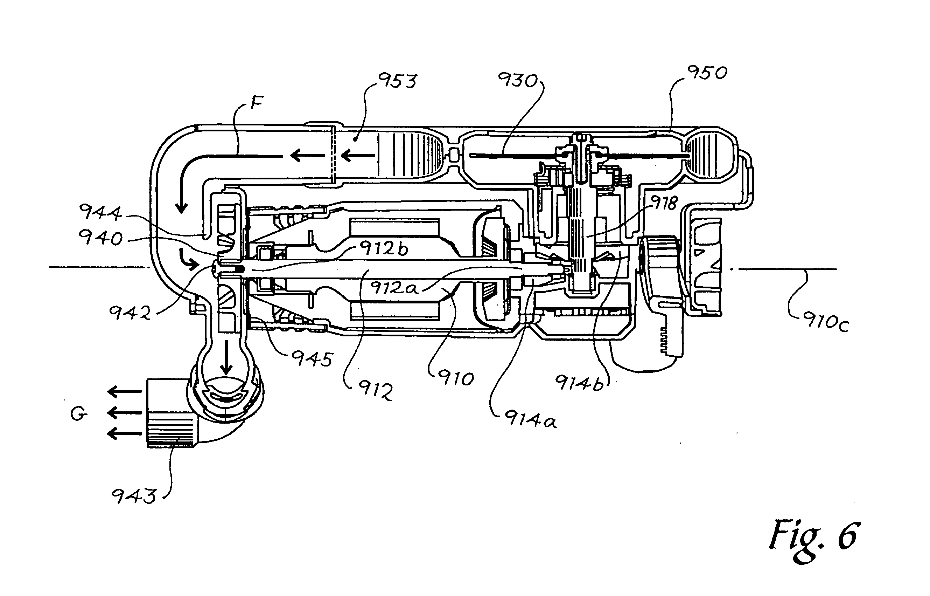

The motor 910 is aligned within the housing 902 such that an axis of rotation 910c of the motor shaft 912 is substantially perpendicular to an axis of rotation of the output shaft 918 8 and the cutting blade 930. The transmission may be a set of substantially perpendicular input and output 916a, 916b bevel gears (FIG. 6), hypoid gears, or worm gears that allow for both the change in direction of the torque from the motor shaft 912 to the output shaft 918 and additionally a change in rotational speed of the output shaft 918 from the speed of the motor shaft 912. In some embodiments, the output gear 916b may include more teeth than the input gear 916a to allow the output shaft 918 (and therefore the cutting blade 930) to rotate more slowly than the motor shaft 912, and therefore the impeller 940 with is mounted to a second end of the motor shaft 912. In some embodiments, reduction ratios of 2:1, 3:1, or other suitable rations may be used. In other embodiments, the transmission may be configured such that the input gear 916a has more teeth than the output gear 916b, such that the output shaft 918 will rotate faster than the input shaft 912.

The plenum 953 is fluidly connected to a volute 942 of an impeller 940. The impeller 940 may be fixed to a second end 912b of the motor shaft 912 (i.e. the end of the motor shaft opposite from the transmission 914). The impeller 940 may provide for forced flow across the motor 910 to remove heat therefrom, as well as providing for flow of air and entrained dust and debris from through the plenum 953. The impeller 940 may include multiple sets of blades. Activation of the motor 910 preferably results in concurrent operation of both the cutting blade 930 and the impeller 940. This simultaneous activation advantageously results in substantially immediate application of the vacuum pressure to the blade guard 950 by or before the cutting blade 930 reaches operational speed.

In this embodiment, the impeller 940 rotates at the same rotational velocity as the motor shaft 912 due to the direct connection therebetween. In other embodiments, the impeller 940 may be indirectly connected to the motor shaft 912 with a transmission therebetween, which allows the rotational velocity of the impeller 940 to be different from the motor shaft 912, as well as the orientation of the impeller 940 to be modified as desired for the tool's design. The impeller is enclosed by a housing that includes an inlet portion 944 that is fluidly connected with the plenum 953 and a cylindrical main portion 945 that surrounds the rotatable impeller blades. The main portion 945 is configured to closely neighbor the impeller blades to minimize flow across the tips of the blades, which would reduce the efficiency of the impeller 940.

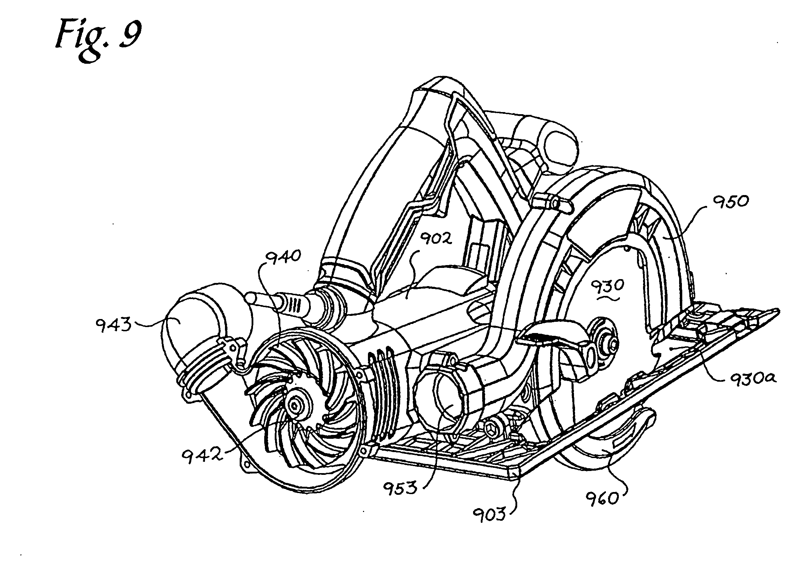

As shown in FIGs. 5 and 9, the plenum 953 makes a 180 degree turn proximate to the volute 942 of the impeller 940 to allow the dust and debris flowing through the plenum 953 to enter a volute 942 (through the inlet 944 of the impeller housing) in the coaxial direction toward the impeller 940. The plenum 953 is configured to minimize the head loss along its length to maximize the suction force felt within the cutting volume 931 through the aperture 958, which maximizes the amount of saw dust, and other dust and debris that is removed from the cutting volume 931 and the region proximate the cutting blade 930 below the base plate 903.

A discharge 943 may be provided from the impeller 940. In some embodiments the discharge 943 is disposed in an orientation and direction tangential to the tips of the impeller 940 blades. The discharge may include a downstream rotatable joint that allows the discharge 943 piping and connection to be aligned at any desired angle with respect to the housing and/or the motor shaft 912. The discharge 943 includes a threaded or other suitable connection structure to receive a hose thereto (either directly, or through a secondary fitting) to allow the evacuated dust and debris to flow to a remote collection point.

In some embodiments, a lower blade guard 960 may be provided that is movably mounted to the blade guard 950 or other portions of the housing 902 to enclose the cutting blade 930 disposed below the base plate 903. The lower blade guard 960 is translatably movable in a path coaxial with the rotational axis of the cutting blade 930 to allow the lower blade guard 960 to be withdrawn from below the base plate 903 when the cutting blade 930 engages a work piece disposed below the base plate 903. Because the plenum 953 fluidly communicates with the cutting volume 931 at a position proximate the forward portion of the cutting blade 930 extending through the slot in the base plate 903, the flow of dust and debris from the cutting volume 930 flows (as aided by the impeller 940) regardless of the position of the lower blade guard 960.

The tool 900 is configured to be used with a remote collection and filtration apparatus 1000 (FIGs. 10-11) to provide for remote collection of dust and debris initially removed form the cutting zone. The collection apparatus 1000 may be configured to removeably connect to an open bucket 1100, similar to a conventional five gallon bucket. The apparatus 1000 may include a collar with one or more inwardly extending tabs, or an inwardly extending ring, that is sufficiently flexible to sufficiently elastically deform to extend over the upper ridge of the bucket 1100, and then when released contact the outer upper wall of the bucket 1100 to provide a sufficient seal of the apparatus 1000 upon the bucket 1100. In other embodiments, the filtration apparatus 1000 may be connected to the bucket 1100 with one or more of a hook clamp 1030, a hook and loop attachment system 1032, a screw clamp, one or more clips, elastic bands, or the like.

The filtration apparatus 1000 may be formed as a cap 1001, best shown in FIG. 11. The cap 1001 may be formed from a breathable fabric, such as a porous or microporous fabric, or a mesh. The cap 1001 includes an inlet aperture 1010 that is configured to fixedly receive an opposite end of the hose 990 that is connected to the discharge 943 of the impeller 940. The cap 1010 is configured to substantially prevent dust and debris over a threshold size from flowing therethrough, while allowing air to escape the bucket 1100. Accordingly, the dust and debris initially created at the cutting zone by the cutting tool 900 is retained within the bucket 1100 for easy and convenient disposal. In some embodiments, the bucket 1100 may be partially filled with water to wet a portion of the dust and debris entering the bucket 1100 to further minimize the amount of dust remaining airborne. This filtration apparatus (1000) may be used with any of the embodiments disclosed hereafter.

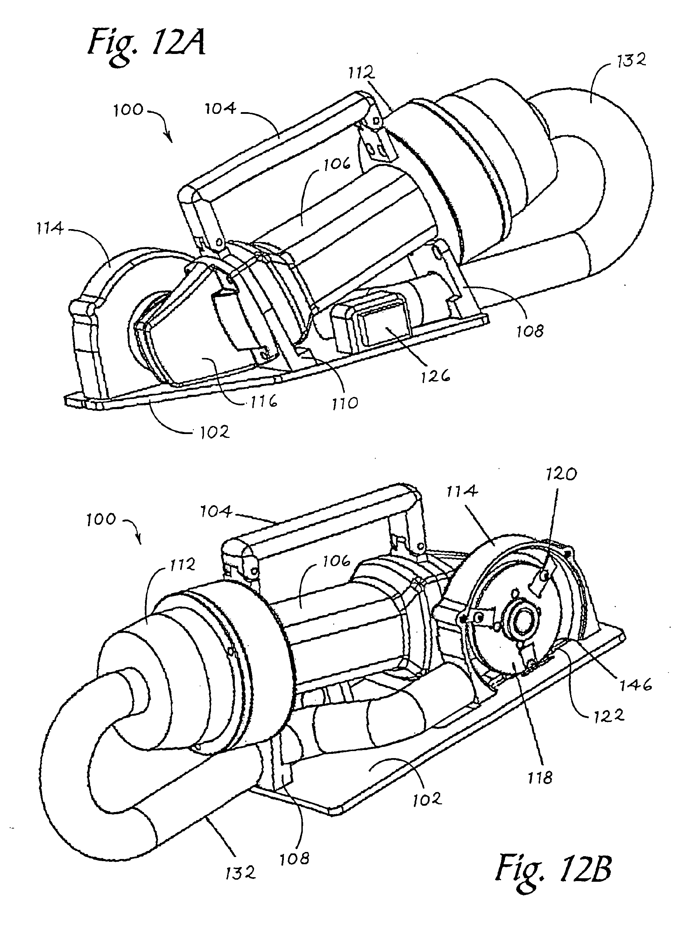

FIGS. 12A and 12B set forth respective isometric views of the portable hand tool 100 in accordance with the first preferred embodiments of the present invention. The hand tool 100 includes a base plate 102 that is configured to be slidingly advanced along a substrate 142 during a cutting operation by way of handle 104. The handle 104 provides a surface configured for the user to grip during operation and for the tool to be used with a single hand.

The base plate 102 supports a motor 106 via support brackets 108, 110. An impeller assembly 112 is mounted to a first end of the motor 106. A cutting blade assembly 114 is mounted to a second end of the motor 106 opposite the first by way of a gear assembly 116.

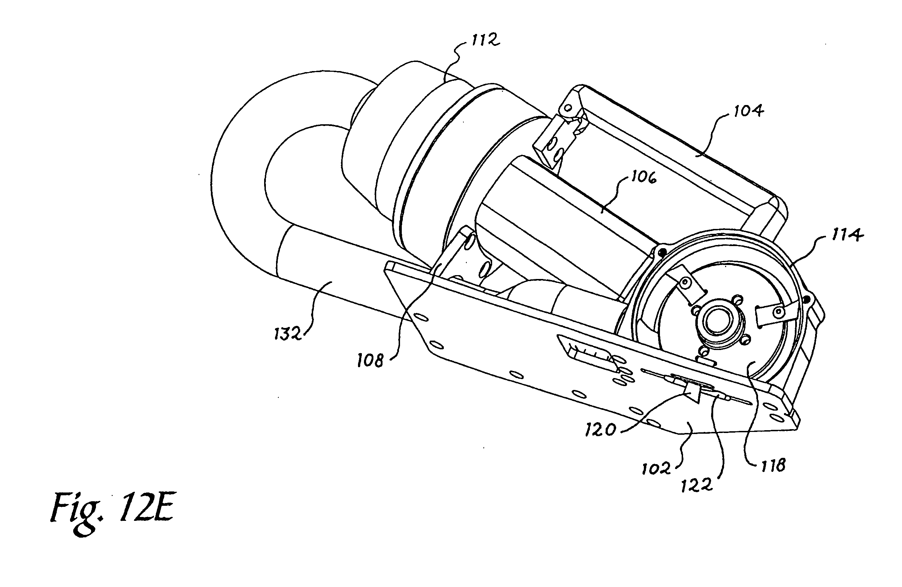

As shown in FIGs. 12B and 12E, the cutting blade assembly 114 includes a cutting blade 118 that partially extends through a slot 122 in the base plate 102. The cutting blade 118 preferably has a plurality of individual blade members 120 radially extending therefrom, so that the blade 118 is particularly suitable for cutting concrete board. However, other cutting blade 118 configurations can readily be used as desired.

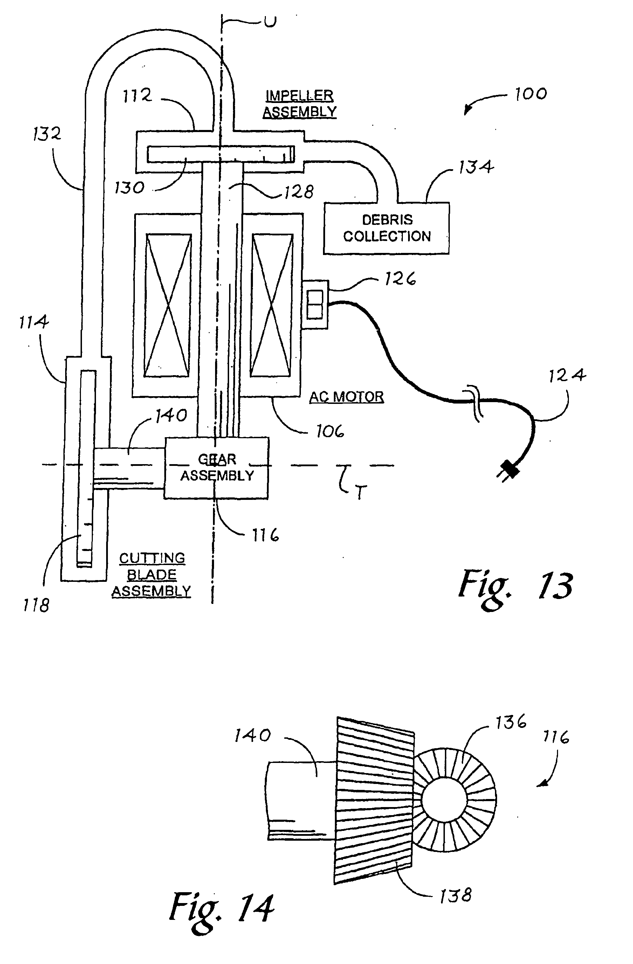

As further shown in the schematic depiction of FIG. 13, the motor 106 is preferably characterized as an alternating current (AC) universal motor. The motor 106 is preferably supplied with alternating current (AC) power via cord 124 (FIG. 13) and user activated on-off switch 126. The motor 106 can alternatively be supplied by direct current (DC) power such as from an associated battery pack. Although not shown, a user activated switch can be incorporated with the handle 104 so that pressure is required from the hand of a user to activate the motor 106.

The motor 106 preferably includes a central shaft 128 that includes a longitudinal axis U (FIG. 13), with the central shaft 128 being rotated at a base rotational rate. This rate can be any suitable value, such as at or above around 20,000 revolutions per minute (rpm). In another preferred embodiment, the rotational rate of the shaft 128 is at about 37,000 rpm. An impeller 130 is preferably mounted upon a first end of the shaft 128 to generate a pressure drop (vacuum pressure) so that an airflow path is established from the cutting blade assembly 114 to the impeller assembly 112 via conduit 132. As explained in greater detail below, this airflow is configured to capture and transfer particulates generated during operation of the cutting blade 118 to a debris collection mechanism 134 of the impeller assembly 112. It will be noted that in this preferred arrangement, the impeller will rotate substantially at the rotational rate of the central shaft 128.

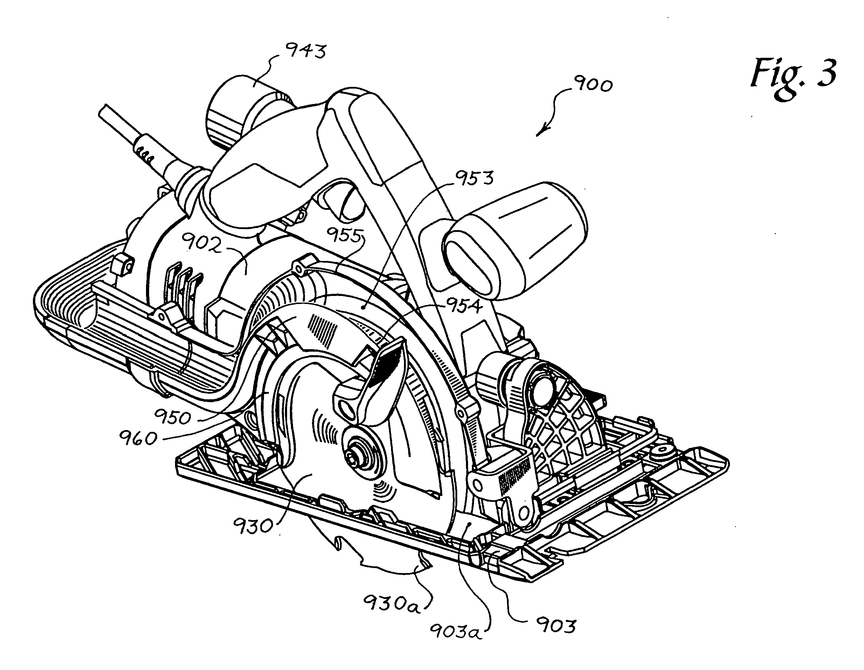

The gear assembly 116 is mounted to a second end of the central shaft 128 and is includes a selected gear reduction rate. In some embodiments, bevel gears with perpendicular shafts therefrom may be used. In other embodiments, spur or helical gears with parallel shafts therefrom may be used. The gear reduction ratio can be any suitable value and will depend upon and be proportional to the rotation rate of the central shaft 128. One preferred gear reduction rate is on the order of about 3.5:1. In other embodiments, reduction ratios of 2:1, 3:1, or other suitable reduction ratios may be used. Preferably, the blade 118 operates within the range of from about 7500 rpm to about 11,000 rpm, although this is not necessarily required. Although a number of gearbox configurations can be utilized, a transverse gear arrangement is preferably utilized such as generally represented in FIG. 3. In some embodiments, a worm gear can be used for the gear assembly 116, which provides larger gear reduction ratios than above.

More specifically, FIG. 14 shows a first gear 136 mounted to and in axial alignment with the central shaft 128 to rotate at the first rate. A second gear 138 is mounted transversely with and engages the first gear 136 to rotate at a second rate, which may be reduced or increased from the first rate. Gears 136, 138 may be bevel gears, as shown herein, and in other embodiments gears 136, 138 may be helical gears, hypoid gears, worm gears, or the like. This second rate can be, for example, about 10,000 rpm. A blade support shaft 140 extends from the second gear 138 to rotate the cutting blade 118 at this second rate. Preferably, the blade support shaft 140 extends at substantially 90 degrees with respect to the central shaft 128 of the motor 106. The blade support shaft 140 extends along a longitudinal axis T, as shown in FIG. 13.

In this way, both the impeller 130 and the cutting blade 118 are driven by the same motor assembly, but at different respective rates. Preferably, the impeller 130 rotates at a rate that is substantially greater than the rate of the cutting blade 118, although such is not necessarily required. In other embodiments, the cutting blade 118 may rotate at a higher speed than the impeller 130.

While the gear assembly 116 is preferably characterized as a gear reduction assembly, such is not necessarily required. In alternative embodiments, the gear assembly 116 can be configured to produce an increase in speed rather than a reduction in speed. It is also not necessarily required that the gear assembly 116 be located between the motor and the cutting blade 118. For example, in further alternative embodiments the blade 118 is rotated at the base rotational rate of the shaft 128, and the gear assembly 116 is disposed between the shaft 128 and the impeller 130. Various other alternatives will readily occur to the skilled artisan upon review of the present disclosure and are included within the scope of the present discussion.

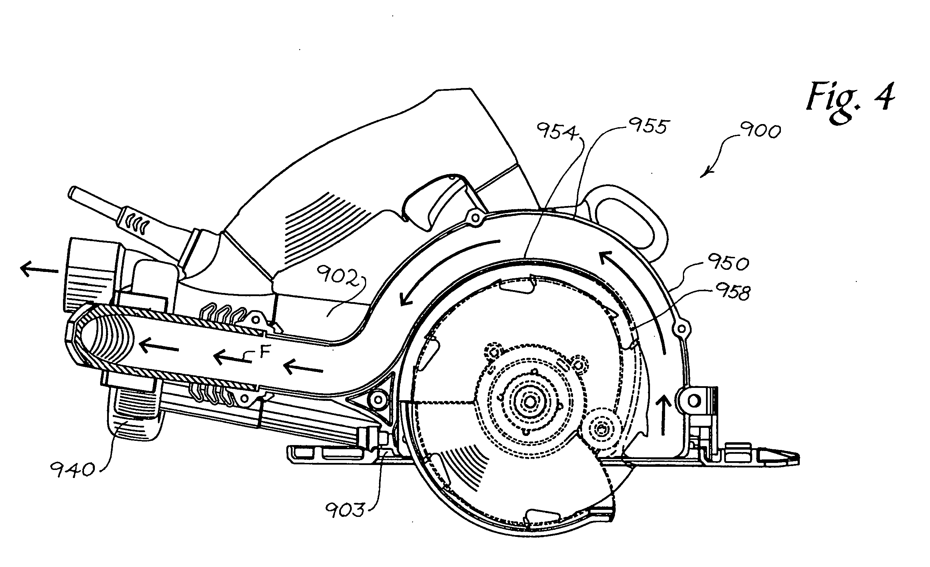

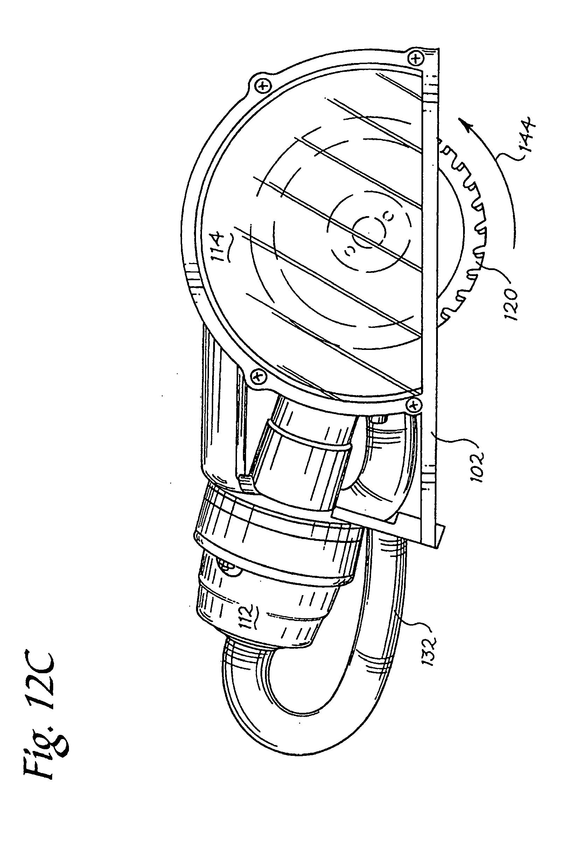

FIGs. 15 and 12C provide detailed views of the cutting blade assembly 114 to further illustrate preferred operation thereof. More specifically, the base plate 102 is slidingly advanced along a substrate 142 and the blade 118 extends through the aperture 122 (FIG. 12B) to cut or otherwise remove material therefrom. The blade 118 preferably rotates in direction 144 (counter-clockwise as set forth in FIG. 4), which reduces a tendency of the tool 100 to be pulled forward through the substrate 142 during operation.

The cutting blade assembly 114 further preferably includes a cover assembly 146 in which the blade 118 is rotated. The cover assembly 146 preferably forms a channel, or plenum 148 that extends across a top portion of the blade 118 and which terminates in an outlet port 150. The port 150, in turn, is arranged to be in fluidic communication with the conduit 132 (see e.g., FIG. 12B). This allows particulates generated by the interaction of the blade 118 and the substrate 144 to be directed and urged along the plenum 146 and through the port 150 in response to the pressure drop generated by the impeller 130.

Preferably, the blade 118 extends all the way through the substrate 142 and a selected distance DI below the substrate 142, as generally depicted in FIG. 16. This selected distance DI should be as large as possible to minimize the production of dust and debris during the cutting process. This advantageously increases the ability of the tool 100 to capture substantially all of the particulates generated by the cutting operation. The tool 100 can be configured to provide a constant, preselected blade depth, or can include a suitable adjustment mechanism to adjust the depth to accommodate different thicknesses of substrate 142.

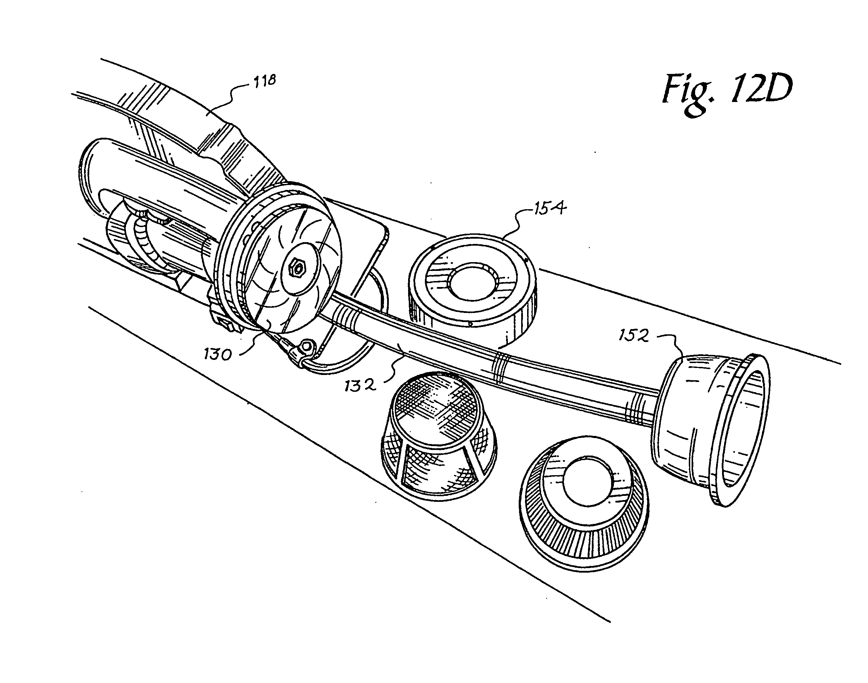

FIGs. 17 and 12D provide detailed views of an impeller assembly 112. A fan housing 152 forms an interior chamber 157 in which the impeller 130 is rotated. The fan housing 152 may be monolithically formed with the housing. The fan housing 152 includes an inlet port 154 in fluidic communication with the conduit 132. The aforementioned debris collection mechanism 134 can take any number of forms, such as a mesh filter layer 156 which substantially retains the airborne particulates while allowing a "clean" airflow to pass through vent ports 158. The filter is removable for easy cleaning, emptying, or changing. Alternatively, the debris collection mechanism can comprise an attachable bag (not shown) that collects the particulates from the conduit 128 as urged by the impeller 130. The filter can also take the form of a tube formed of breathable fabric that is connected to the outlet. The fabric could be porous, microporous, or a mesh. The tube is attached to a container, such as a typical one gallon bucket, by a clamp. This assembly provides a means to collect debris in a container while allowing clean air to pass through the wall of the tubular filter.

As shown in FIGs. 18-19, another exemplary preferable handheld board cutter assembly 200 is provided. The assembly 200 is configured to cut a substrate 202, such as concrete fiber board or the like. The assembly can alternatively be configured to cut any number of different types of substrates 202, such as but not limited to a sheet of concrete board or drywall. Alternatively, the apparatus may be configured to cut any number of different types of substrates, such as fiber cement board, wood or wood products, composite decking boards, MDF, rock or natural or engineered mineral based materials (e.g. granite, brick), metal, or any other substrates that produce debris and dust when cut.

The assembly 200 includes a cutting blade 204 configured to operate upon the substrate 202 to remove particulate material therefrom. Preferably, the cutting blade 204 is characterized as a substantially disk-shaped blade which is rotated at a high rotational rate during operation. The cutting blade 204 preferably comprises one or more radially extending teeth 204a. The cutting blade 204 is preferably rotated by a motor in a first rotational direction 206.

A base, or shoe 208 preferably rests upon the substrate 202 and is guided therealong by the user during the cutting operation via a suitable handle 288. The handle 288 is configured to be gripped by the user to allow the tool 200 to be moved and operated with a hand of the user. In some embodiments, the handle 288 can be configured to be moved and operated by a single hand of the user. The cutting blade 204 preferably extends through an aperture (not shown) of the base plate 208 to access the substrate 202. As discussed in the embodiment above, the distance D1 that the cutting blade extends below the base 208 and therefore the substrate 202 should be as long as possible to minimize the amount of dust and debris created when cutting the substrate 202 and to facilitate the direction and urging of the dust and debris created to the ports 214, 216 discussed below.

The assembly 200 further preferably comprises a cover assembly 210 in which the cutting blade 204 is rotated. The cover assembly 210 forms a channel, or plenum 212 that extends across a top portion of the cutting blade 204. A first port 214 is preferably arranged as shown adjacent a leading edge of the cutting blade 204, and a second port 216 is preferably arranged adjacent a trailing edge of the cutting blade 204. The ports 214, 216 preferably bound opposing ends of the plenum 212 as shown.

Vacuum (suction pressure) is preferably applied to the respective ports 214, 216 via conduits, or legs 218 and 220. The vacuum is preferably generated by an impeller or other pressure source (FIG. 19). Other pressure arrangements can be used in other embodiments including an additional port that supplies positive pressure to the cover assembly 210 and additional outlet ports arranged along the length of the plenum 212.

As shown in FIGs. 18-18D, the conduits 218 and 220 preferably meet at a y-shaped junction 222, and a common conduit, or branch 224 extends from the junction 222 to the pressure source. The interior diameters of the respective conduits will vary depending on the requirements of a given application, but will preferably be sized to provide efficient flow and reduced pressure drop.

The first, or leading edge port 214 is preferably positioned so that particulates (debris) generated by the interaction between the cutting blade 204 and the substrate 202 are substantially directed and urged toward and through the port 214. The dimensional and axial orientation of the port 214, and the cutting depth of the cutting blade 204, are preferably arranged to enhance the flow of debris exiting the kerf area into the port 214. As discussed in the above embodiment, a maximum cutting depth of the cutting blade 204 is preferred to minimize the amount of dust and debris created and/or the removal of any dust or debris through the conduits 218, 220 and through the impeller.

It is contemplated that the assembly 200 will be configured so that a substantial portion of the generated debris will be drawn through the first port 214. That is, the debris will be directed and urged upwardly along a tangential path that tends to direct and urge the flow of such debris toward and into the leading edge port 214. Upwardly directed debris not drawn into the leading edge port 214 will generally advance along the plenum 212 and through the second, trailing edge port 216. In this way, substantially all of the particulate, dust, and debris generated by the cutting operation can be captured and removed from the work area.

FIG. 19 provides a generalized schematic representation of the assembly 200 in accordance with a preferred embodiment. The motor 230 is preferably characterized as an AC universal motor, although the motor 230 can alternatively be supplied by DC power such as from an associated battery pack.

The motor 230 preferably includes a motor shaft 232 that is rotated at a base rotational rate. This rate can be any suitable value, such as at or above around 20,000 revolutions per minute (rpm). In another preferred embodiment, the rotational rate of the shaft 232 is at about 37,000 rpm.

The impeller 234 is mounted to a first end of the shaft 232 for rotation thereby to generate the vacuum (suction pressure) that is applied to ports 214, 216 due to the fluid connection therewith. The motor shaft 232 and the impeller 234 are each rotated about an axis S, shown in FIG. 19. Although not required, the impeller 234 preferably rotates at the rotational rate of the motor (e.g., 20,000 rpm; 37,000 rpm, or other suitable rates).

A gear assembly 236 is preferably mounted to a second end of the shaft 232 and includes a selected gear reduction rate, such as on the order of at least 2:1. In some embodiments, bevel gears with perpendicular shafts therefrom may be used. In other embodiments, spur or helical gears with parallel shafts therefrom may be used. This provides a reduced rotation rate for the cutting blade 204 to a suitable value, such as (but not limited to) from about 7500 rpm to about 11,000 rpm, as desired. Other rotational rates higher or lower than this range can be readily used, such as a rate of about 5000 rpm. The optimum cutting blade 204 rotational rate will depend upon a number of factors such as the type of substrate 202 to be cut, the diameter of the cutting blade 204, and the cutting depth. The gear assembly 236 preferably supports the cutting blade 204 along a second axis R that is transverse or substantially perpendicular to the motor shaft axis S (FIG. 19). The gear assembly 236 may be provided with gears similar to gear assembly 118 discussed above.

Activation of the motor 230 thus preferably results in concurrent operation of both the cutting blade 204 and the impeller 234. The preferred close proximity of the impeller 234 to the cutting blade 204 as depicted in FIG. 19 advantageously results in substantially immediate application of the vacuum pressure to the cover assembly 210 by or before the cutting blade 204 reaches operational speed.

The impeller 234 may be housed within an impeller housing 238 with an inlet port 240 in fluidic communication with a distal end of the common conduit 224. The impeller housing 238 may be monolithically formed with the housing of the tool 200. An outlet port is generally depicted at 242 and this is preferably connectable to an extended conduit 244. The extended conduit 244 is preferably characterized as a flexible hose, such as a 1-1/2 inch or 2 inch diameter rubber or plastic hose. The extended conduit 244 is preferably relatively long, such as on the order of about 30 feet in length, although other lengths and constructions can be used (e.g., 15 feet, etc.).

Using an extended conduit 244 in this fashion allows the particulates to be transported to an appropriate location away from the user's work area, while providing sufficient flow characteristics to efficiently transport the dust and debris along the length of the extended conduit 244. In a preferred embodiment, the extended conduit 244 terminates at a debris collection assembly 246, such as a large filter bag or canister. Alternatively, the end of the extended conduit 244 can be vented to the surrounding atmosphere.

The foregoing configuration advantageously allows a user to utilize a portable hand tool in a location in which the associated debris is highly undesirable (e.g., in a garage, within a residential or commercial structure) and the extended conduit 244 can be directed outside to exhaust the generated particles to the debris collection assembly 246, or the atmosphere. The collection assembly described in the above embodiment and shown in FIG. 17 may be used with the current embodiment.

In situations where the assembly 200 is configured to cut concrete boards, the cutting blade 204 may be formed of a polychrystaline diamond construction, though other materials such as carbide can readily be used. A 5-3/8 inch diameter multi-tooth blade is a particularly advantageous size, although other sizes including larger diameters of around 7 inches or more, and smaller diameters of around 4 inches or less, can also be used as desired. For example, in some embodiments a 5.0 inch blade may be used. The blade may be configured with carbide teeth or with other materials or surface finishes. It will be appreciated that the multi-port arrangement discussed herein is particularly suitable for a hand held cutting tool such as disclosed in the embodiments discussed herein.

The close placement of the impeller to the ports 214, 216, as well as the relatively high rate of rotational speed of the impeller 234, generally provides enhanced collection from the earliest stages of tool assembly use. It will be readily appreciated that while the preferred placement of the impeller 234 opposite the cutting blade 204 as shown in FIG. 19 provides a particularly advantageous arrangement. In other embodiments a separate motor to rotatably drive the impeller 234 may be used to achieve the same operational goal of removing dust and debris from the work site set forth herein.

Similarly, the flow characteristics provided by this preferred impeller 234 arrangement advantageously allows the use of a distally located, large capacity debris collection system, including a system that accommodates debris from multiple sources. This provides an alternative to conventional systems that use local collection bags, HEPA filters, etc. that may be overwhelmed in situations where large amounts of particulate matter is generated during operation.

Turning now to FIGs. 22 and 23 an alternate handheld portable tool 500 is provided. The tool 500 includes a housing 502 that supports and fixes a motor 510 with a motor shaft 512 extending therefrom, a torque transmission member 514, an output shaft 518, and a cutting blade 530. The housing 502 includes a handle 580 that extends therefrom and provides a surface configured for the user to grip and is configured to allow the user to use and move the tool 500 with a hand of the user. In some embodiments, the handle 580 is configured to allow the user to use and move the tool with a single hand. A trigger 582 is movably mounted to the handle 580 and allows the user to selectively operate the motor 510. The cutting blade 530 may be similar to blade 118 discussed above. A portion of the cutting blade 530 extends through a blade aperture in a shoe, or base plate 519 that is fixed to the housing 502 and is the surface upon which the tool 500 contacts the substrate or material to be cut.

The motor 510 may be an AC motor powered by one or more phases of line current supplied to the motor 510 by an attached cord 590, or in alternate embodiments the motor 510 may be powered from a DC battery installed on the portable tool 500. The operation of the motor 510 and ultimately the rotation of the cutting blade 530 may be controlled by a trigger mounted on the housing 502. In some embodiments, the trigger includes an interlock that substantially prevents inadvertent operation of the saw 500.

As shown in FIG. 22, the motor 510 is aligned within the housing 502 such that the motor shaft 512 is substantially parallel to a longitudinal axis Z of the cutting blade 530. In other embodiments, the motor 510 may be disposed within the housing 502 such that the motor shaft 512 is substantially perpendicular or at an oblique angle with respect to a plane through the saw blade 530. In embodiments where the motor shaft 512 is parallel to the saw blade 530, the transmission member 514 may be a set of substantially perpendicular bevel gears 514, 516 that allow for both the change in direction of the torque from the motor 510 to the saw blade 530 and additionally a change in rotational speed of the output shaft 518 from the speed of the motor shaft 512. In some embodiments, meshed worm gears may be used for the transmission 514.

The saw blade 530 is substantially enclosed within a blade guard 550 that encloses a majority of the circumferential edge of the saw blade 530 and provides a physical barrier from a user inadvertently contacting the upper and side portions of the rotating saw blade 530. The blade guard 550 further provides an enclosure, or plenum to retain a significant portion of the dust and debris created while cutting a workpiece or substrate within the blade guard 550 and the housing 502 and therefore prevent the same dust and debris from being expelled radially from the saw blade to the environment.

In some embodiments, a lower blade guard 552 is provided that is movably mounted to the upper blade guard 550 or other portions of the housing 502 to substantially fully enclose the circumference of the saw blade 530 to prevent inadvertent contact with the saw blade 530.
The lower blade guard 552 is disposed to be withdrawn from below the shoe 519 and the circumference of the saw blade 530 below the shoe 519 when the tool 500 is presented to cut a workpiece or a substrate. This lower blade guard can be utilized in the other embodiments disclosed herein.

An impeller 540 is disposed on the output shaft 518 between the output bevel gear 516 and the saw blade 530. The impeller 540 is configured to establish a large flow of air, dust, and debris through the impeller 540 due to the establishment of a pressure drop across the impeller 540. The impeller 540 is rotatably disposed within a fan housing 544 that is defined within the housing 502 and provides clearance for the impeller blades 541 to rotate with the impeller 540 and the output shaft 518, but substantially eliminate room between the outer circumferential edges of the impeller blades 541 and the fan housing 544 to substantially eliminate air (and dust and debris entrained therein) from bypassing the impeller 540. In some embodiments, the fan housing 544 may be monolithically formed with the housing 502. Further, the minimized space between the outer circumferential edges of the impeller blades 541 and the fan housing 544 substantially eliminates air flowing through the space in the opposite direction.

The fan housing 544 is preferably substantially sealed with the housing 502 to prevent air (or foreign particulate matter) from outside of the housing 502 from being drawing within the fan housing 544 and through a volute 540a of the impeller without first flowing in the vicinity of the saw blade 530. The fan housing 544 is disposed proximate the upper blade guard 550. An enclosed plenum 548 is defined between the internal volume of the upper blade guard 550 and the fan housing 544 to allow for fluid communication between the internal volume of the upper blade guard 550 and the fan housing 544. In some embodiments a forward aperture 554 is provided in the upper blade guard 550 in the vicinity of the leading edge 530a of the saw blade 530. In still other embodiments, a second aperture 554a may be provided in the upper blade guard 550 in the vicinity of the trailing edge 530b of the saw blade 530.

Each of the forward and rear apertures 554, 554a allow for fluid communication (including air and dust and debris created while the cutting blade 530 cuts a substrate) between the inner volume of the upper blade guard 550 and the fan housing 544 through the enclosed plenum 548. The enclosed plenum 548 may include one or more separate branches extending between respective apertures 554 in the upper blade guard 550 and the fan housing 544, the number of branches being equal to the number of apertures 554. The enclosed plenum 548 is disposed to direct and urge the air, dust, and debris from the internal volume of the upper blade guard 550 to the volute 540a of the impeller 540 to provide the maximum amount of suction within the upper blade guard 550 and remove the most dust and debris as possible.

In this embodiment, the rotational speed of the impeller 540 is the same as the saw blade 530. In some embodiments, the diameter of the impeller 540, and the corresponding length of the blades, or vanes 541 of the impeller 540 may be modified in order to alter the mass flow rate of air, dust, and debris through the impeller 540 for the rotational speed of the saw blade 530. As can be understood, larger vanes generally produce a larger mass flow rate of air, dust, and debris through the impeller 540 for the same rotational speed.

The impeller 540 and fan housing 544 includes a discharge port 543 that is aligned substantially perpendicularly to the rotational axis of the impeller 540 and the output shaft 518. In some embodiments, the discharge 543 is aligned substantially tangential to an outer circumferential edge of the impeller 540. The discharge 543 is aligned to receive air, dust, and debris that flows through the rotating impeller 540 and receives kinetic energy from the impeller blades 541 to ultimately flow tangentially or axially away from the impeller blades 541.

In some embodiments, the discharge 543 promotes flow to a storage container 546 that receives and retains the dust and debris entrained with the air flowing through the impeller 540 to prevent the same from being discharged to the environment, while allowing air to flow therethrough. The storage container 546 may be a bag that is removeably attachable to the discharge 543, which is configured to retain dust and debris, but allow air to flow therethrough. The storage container 546 may be retained on the discharge 543 with a threaded connection, a plurality of clips or tabs, or any suitable removable mechanical connection known in the art. In other embodiments, a rigid structure may be removeably connected to the discharge 543 that is configured with a plurality of apertures sized to allow air to flow therethrough, while retaining a substantial portion of the dust and debris entrained with the air. The rigid structure 546 may be removeably attached to the discharge 543 with a threaded connection, a plurality of tabs or clips, or with other mechanical structure known in the art. An extension hose providing fluid communication to a remote collection container (not shown but similar to the container 154 in FIG. 17) as previously described may also be used.

Another embodiment of a handheld rotary tool 600 is provided in FIG. 20. The tool 600 includes a housing 602 that supports and fixes a motor 610 with a motor shaft 612 extending therefrom, a torque transmission member 614, an output shaft 618, and a cutting blade 630. The cutting blade 630 may be similar to blade 118 discussed above. A portion of the cutting blade 630 extends through a blade aperture in a shoe, or base plate 619 that is fixed to the housing 602 and is the surface upon which the tool 600 contacts the substrate or material to be cut. The housing 602 may include a handle a handle (not shown but similar in operation and orientation to the handle 580 of FIG. 23) as discussed above, that allows the user to move and operate the tool 60 with a single hand.

The motor 610 may be an AC motor powered by one or more phases of line current supplied to the motor 610 by an attached cord 690, or in alternate embodiments the motor 610 may be powered from a DC battery installed on the portable tool 600. The operation of the motor 610 and ultimately the rotation of the cutting blade 630 may be controlled by a trigger mounted on the housing 602. In some embodiments, the trigger includes an interlock that substantially prevents inadvertent operation of the saw 600.

The motor 610 is aligned within the housing 602 such that the motor shaft 612 is substantially parallel to a longitudinal axis W of the cutting blade 630. In other embodiments, the motor 610 may be disposed within the housing 602 such that the motor shaft 612 is substantially perpendicular or at an oblique angle with respect to a plane through the saw blade 630. In embodiments where the motor shaft 612 is parallel to the saw blade 630, the transmission member 614 may be a set of substantially perpendicular bevel gears 615, 616 that allow for both the change in direction of the torque from the motor 610 to the saw blade 630 and additionally a change in rotational speed of the output shaft 618 from the speed of the motor shaft 612. In some embodiments, meshed worm gears may be used for the transmission 614 to provide for a large reduction in rotational speed of the output shaft 618.

The cutting blade 630 is substantially enclosed within a blade guard 650 that encloses a majority of the circumferential edge of the cutting blade 630 and provides a physical barrier from a user inadvertently contacting the upper and side portions of the rotating saw blade 630. The blade guard 650 further provides an enclosure to retain a significant portion of the dust and debris created while cutting a workpiece or substrate within the blade guard 650 and the housing 602 and therefore prevent the same dust and debris from being expelled radially from the saw blade to the environment.

In some embodiments, a lower blade guard may be provided that is movably mounted to the upper blade guard 650 or other portions of the housing 602 to substantially fully enclose the circumference of the saw blade 630 to prevent inadvertent contact with the saw blade 630. The lower blade guard may be similar to lower blade guards 552 described and shown in the embodiment above.

An impeller 640 is rotatably driven by the output shaft 618 through a second transmission 619. The second transmission 619 may be a belt drive, which is rotatably mounted to respective pulleys 619b, 619c provided on the output shaft 618 and an impeller shaft 642, respectively. The transmission can be designed such that the impeller 640 rotates at a higher speed than the cutting blade 630. Providing the impeller 640 on a separate shaft from the motor and output shafts 612, 618 allows the impeller 640 to be provided remotely from the motor and cutting blade 630. This location allows for a more compact tool with the performance advantages of the tools described in the other embodiments herein.

The impeller 640 is configured to establish a large flow of air, dust, and debris included therewith through the impeller 640 due to the establishment of a pressure drop across the impeller 640. The impeller 640 is rotatably disposed within a fan housing 644 that is defined within the housing 602 and provides clearance for the impeller blades 641 to rotate with the impeller 640 and the output shaft 618, but substantially eliminate room between the outer circumferential edges of the impeller blades 641 and the fan housing 644 to substantially eliminate air (and dust and debris entrained therein) from bypassing the impeller 640. In some embodiments, the fan housing 644 may be monolithically formed with the housing 602. Further, the minimized space between the outer circumferential edges of the impeller blades 641 and the fan housing 644 substantially eliminates air flowing through the space in the opposite direction.

The fan housing 644 is preferably substantially sealed with the housing 602 to prevent air (or foreign particulate matter) from outside of the housing 602 from being drawn within the fan housing 644 and through a volute 640a of the impeller without first flowing in the vicinity of the cutting blade 630.

The fan housing 644 and impeller 640 may be disposed on the opposite side of the motor 610 from the cutting blade 630, as shown in FIG. 20, or in other embodiments, the fan housing 644 and impeller 640 may be disposed on the same side of the motor 610 as the cutting blade 630.

An enclosed plenum 648 is defined between the internal volume of the upper blade guard 650 and the fan housing 644 to allow for fluid communication between the internal volume of the upper blade guard 650 and the fan housing 644. In some embodiments a forward aperture 654 is provided in the upper blade guard 650 in the vicinity of the leading edge 630a of the cutting blade 630. In still other embodiments, a second aperture 654a may be provided in the upper blade guard 650 in the vicinity of the trailing edge 630b of the cutting blade 630.

Each of the forward and rear apertures 654, 654a allow for fluid communication (including air and dust and debris created while the cutting blade 630 cuts a substrate) between the inner volume of the upper blade guard 650 and the fan housing 644 through the enclosed plenum 648. The enclosed plenum 648 may include one or more separate branches extending between respective apertures 654 in the upper blade guard 650 and the fan housing 644, the number of branches being equal to the number of apertures 654. The enclosed plenum 648 is disposed to direct and urge the air, dust, and debris from the internal volume of the upper blade guard 650 to the volute 640a of the impeller 640 to provide the maximum amount of suction within the upper blade guard 650 and remove the most dust and debris as possible.

The impeller 640 and fan housing 644 includes a discharge 643 that is aligned substantially perpendicularly to the rotational axis of the impeller 640 and the output shaft 618. The discharge 643 is aligned to receive air, dust, and debris that flows through the rotating impeller 640 and receives kinetic energy from the impeller blades 641 to ultimately flow tangentially or axially away from the impeller blades 641.

In some embodiments, the discharge 643 promotes flow to a storage container that receives and retains the dust and debris entrained with the air flowing through the impeller 640 to prevent the same from being discharged to the environment, while allowing air to flow therethrough. The storage container may be similar to storage container 546 discussed above. In other embodiments, a hose 647 may be attached to the discharge 643 to allow the air, dust, and debris to be removed from the tool 600 to a remote location.

Turning now to FIG. 21, another handheld power tool 700 is provided. The tool 700 includes a housing 702 that supports and fixes a motor 710 with a motor shaft 712 extending therefrom, a torque transmission member 714, an output shaft 718, and a cutting blade 730. The cutting blade 730 may be similar to blade 118 discussed above. A portion of the cutting blade 730 extends through a blade aperture in a shoe, or base plate 709 that is fixed to the housing 702 and is the surface upon which the tool 700 contacts the substrate or material to be cut. A handle may be provided on the housing 702 (similar in operation and configuration to handle 580 shown in FIG. 23 discussed above) to allow the user to move and operate the tool 700 with a single hand.

The motor 710 may be an AC motor powered by one or more phases of line current supplied to the motor 710 by an attached cord 790, or in alternate embodiments the motor 710 may be powered from a DC battery installed on the portable tool 700. The operation of the motor 710 and ultimately the rotation of the cutting blade 730 may be controlled by a trigger mounted on the housing 702 and specifically the handle. In some embodiments, the trigger includes an interlock that substantially prevents inadvertent operation of the saw 700.

The motor 710 is aligned within the housing 702 such that the motor shaft 712 is substantially parallel to a longitudinal axis X of the cutting blade 730. In other embodiments, the motor 710 may be disposed within the housing 702 such that the motor shaft 712 is substantially perpendicular or at an oblique angle with respect to a plane through the cutting blade 730. In embodiments where the motor shaft 712 is parallel to the cutting blade 730, the transmission member 714 may be a set of substantially perpendicular bevel gears 715, 716 that allow for both the change in direction of the torque from the motor 710 to the cutting blade 730 and additionally a change in rotational speed of the output shaft 718 from the speed of the motor shaft 712. In some embodiments, worm gears may be used for the transmission member to provide for a large change in rotational speed between the motor shaft 712 and the output shaft 718.

The cutting blade 730 is substantially enclosed within a blade guard 750 that encloses a majority of the circumferential edge of the cutting blade 730 and provides a physical barrier from a user inadvertently contacting the upper and side portions of the rotating cutting blade 730. The blade guard 750 further provides an enclosure to retain a significant portion of the dust and debris created while cutting a workpiece or substrate within the blade guard 750 and the housing 702 and therefore prevent the same dust and debris from being expelled radially from the cutting blade 730 to the environment.

In some embodiments, a lower blade guard (not shown, but similar to lower blade guard 552) is provided that is movably mounted to the upper blade guard 750 or other portions of the housing 702 to substantially fully enclose the circumference of the cutting blade 730 to prevent inadvertent contact with the cutting blade 730.

An impeller 740 is rotatably driven by the motor shaft 712 with a second transmission 719 located at the opposite end of the motor shaft 712 from the transmission 714. The second transmission 719 may be a meshed set of bevel gears, with a first input gear 719b on the motor shaft 712 and a second output gear 719c on an impeller shaft 742.

In an alternate embodiment shown in FIG. 21a, the impeller 740 may be rotatably driven by an impeller shaft 742a that is ultimately driven by the motor shaft 712 with an alternate second transmission 719a. The alternate second transmission 719a includes a second output bevel gear 719d that is meshed with the input bevel gear 715 of the motor shaft 712. The second out bevel gear 719d may include less gear teeth, and/or be formed with a smaller diameter than the first output bevel gear 719c such that the impeller 740 rotates at a faster speed than the cutting blade 730.

The impeller 740 is configured to establish a large flow of air, dust, and debris included therewith through the impeller 740 due to the establishment of a pressure drop across the impeller 740. The impeller 740 is rotatably disposed within a fan housing 744 that is defined within the housing 702 and provides clearance for the impeller 740 to rotate, but substantially eliminate room between the outer circumferential edges of the impeller blades 741 and the fan housing 744 to substantially eliminate air (and dust and debris entrained therein) from bypassing the impeller 740. In some embodiments, the fan housing 744 may be monolithically formed with the housing 702. Further, the minimized space between the outer circumferential edges of the impeller blades 741 and the fan housing 744 substantially eliminates air flowing through the space in the opposite direction.

The fan housing 744 and impeller 740 may be disposed on the opposite side of the motor 710 from the cutting blade 730, as shown in FIG. 21, or in other embodiments as in FIG. 21a, the fan housing 744 and impeller 740 may be disposed on the same side of the motor 710 as the cutting blade 730.

An enclosed plenum 748 is defined between the internal volume of the upper blade guard 750 and the fan housing 744 to allow for fluid communication between the internal volume of the upper blade guard 750 and the fan housing 744. In some embodiments a forward aperture 754 is provided in the upper blade guard 750 in the vicinity of the leading edge 730a of the cutting blade 730. In still other embodiments, a second aperture 754a may be provided in the upper blade guard 750 in the vicinity of the trailing edge 730b of the cutting blade 730.

Each of the forward and rear apertures 754, 754a allow for fluid communication (including air and dust and debris created while the cutting blade 730 cuts a substrate) between the inner volume of the upper blade guard 750 and the fan housing 744 through the enclosed plenum 748. The enclosed plenum 748 may include one or more separate branches extending between respective apertures 754 in the upper blade guard 750 and the fan housing 744, the number of branches being equal to the number of apertures 754. The enclosed plenum 748 is disposed to direct and urge the air, dust, and debris from the internal volume of the upper blade guard 750 to the volute 740a of the impeller 740 to provide the maximum amount of suction within the upper blade guard 750 and remove the most dust and debris as possible.

The impeller 740 and fan housing 744 includes a discharge 743 that is aligned substantially perpendicularly to the rotational axis of the impeller 740 and the output shaft 718. The discharge 743 is aligned to receive air, dust, and debris that flows through the rotating impeller 740 and receives kinetic energy from the impeller blades 741 to ultimately flow tangentially or axially away from the impeller blades 741.

In some embodiments, the discharge 743 promotes flow to a storage container (not shown but similar to storage container 546) that receives and retains the dust and debris entrained with the air flowing through the impeller 740 to prevent the same from being discharged to the environment, while allowing air to flow therethrough.

Another alternate embodiment of a handheld rotary tool 400 is discussed with reference to FIG. 24. The tool 400 includes a housing 402 that supports and fixes a motor (not shown) with a motor shaft 412 extending therefrom, a torque transmission member 414, an impeller shaft 418, and a cutting blade 430. A portion of the cutting blade 430 extends through a blade aperture in a shoe, or base plate, 419 that is fixed to the housing 402 and is the surface upon which the tool 400 contacts the substrate 401 or material to be cut.

The motor may be powered from one or more phases of AC line current supplied to the motor by an attached cord, or in alternate embodiments the motor may be powered from a DC battery (rechargeable or otherwise) installed on the portable tool 400. A handle 408 is disposed on the housing 402 to allow the user to carry and operate the tool 400 with a single hand. The operation of the motor and ultimately the rotation of the cutting blade 430 is controlled by a trigger 409 or other operational mechanism mounted on the handle 408 or on the housing 402. The handle 408 is provided on the housing 402 that is configured to allow the tool 400 to be transported or carried by a single hand of the user. In some embodiments, the trigger 409 includes an interlock that substantially prevents inadvertent operation of the saw 400. As shown in FIG. 24, the motor is aligned within the housing 402 such that the motor shaft 412 is parallel to an impeller shaft 418, upon which the impeller 440 rotates, with the motor shaft 412 and the impeller shaft 418 being rotationally connected to transfer torque from the motor shaft 412 to the impeller shaft 418 with a transmission 414. The cutting blade 430 is fixed with an end of the motor shaft 412 to rotate therewith.

In some embodiments, the transmission 414 may be a belt 424 that is disposed in tension around pulleys 414a, 414b that are disposed on the respective motor and impeller shafts 412, 418. In other embodiments, a plurality of spur or helical gears (not shown) may be meshingly engaged to transfer torque from the motor shaft 412 to the output shaft 418. In these embodiments, the relative sizes of the pulleys 414a, 414b or the input and output gears are designed to provide the desired rotational speed of the impeller shaft 418 based on a specific motor shaft 412 speed.

In some embodiments, an impeller 440 may be provided on either the motor shaft 412 or the output shaft 418 (as shown in FIG. 24), with the impeller 440 rotating at a speed proportional to the motor shaft speed 412 based on the position of the impeller 440 and the transmission ratio provided between the shafts 412, 418. As discussed above, the transmission ratio is determined by the relative diameters of the pulleys 414a, 414b and the relative number of teeth of the meshed gears on either shaft.

As with the embodiments discussed above, the cutting blade 430 is disposed within an upper guard 450 that is fixed to the housing 402 and provides a protective barrier against inadvertent contact with the majority of the circumference of the cutting blade 430 and substantially limiting the radial expulsion of debris and dust created when cutting a substrate in the radial or tangential direction from the circumference of the cutting blade 430 and the blade teeth. In some embodiments, a lower blade guard 452 is provided that is movably mounted to the upper blade guard 450 or other portions of the housing 402 to substantially fully enclose the circumference of the cutting blade 430 to prevent inadvertent contact with the cutting blade 430. The lower blade guard 452 is disposed to be withdrawn from below the shoe 419 and the circumference of the cutting blade 430 below the shoe 419 when the tool 400 is presented to cut a workpiece or a substrate.

The impeller 440 is disposed within a disk-like fan housing 444 that substantially encloses the impeller 440. The walls of the fan housing 444 are disposed with an inner diameter slightly larger than the diameter of the impeller blades 441, to reduce the area for air, dust, and debris flow that bypasses the impeller 440, and to reduce the area for potential reverse air flow past the impeller blades 441. The impeller 440 includes a suction port, or volute 440a that receives air, dust, and debris therethrough subsequently exits the impeller 440 and discharge 443 from the fan housing 444 that is disposed axially or tangentially from the impeller blades 441.

A suction plenum is disposed between the internal volume within the upper guard 450 and the fan housing 444 to allow for fluid communication between the two volumes. The suction plenum is constructed and disposed similar to suction plenums 548, 648, 748, discussed above. One or more apertures may be provided in the upper blade guard 450 to allow communication of air, dust, and debris from the cutting zone to the impeller 440. The apertures and assorted structure may be constructed similarly to the similar structure discussed and shown above.

In some embodiments, the discharge 443 is configured to receive a storage container or similar device that receives the discharge flow of air, dust, and debris from the impeller 440. The storage container may be similar in design and operation to the storage container 546, discussed above.

Another embodiment of a handheld rotary tool 800 is provided in FIG. 25. The tool 800 includes a housing 802 that supports and fixes a motor 810 with a motor shaft 812 extending therefrom, a torque transmission member 814, an output shaft 818, and a cutting blade 830. The cutting blade 830 may be similar to blade 118 discussed above. A portion of the cutting blade 830 extends through a blade aperture in a shoe, or base plate 819 that is fixed (either movably fixed or rigidly mounted) to the housing and is the surface upon which the tool 800 contacts the substrate or material to be cut.

The motor 810 may be an AC motor powered by one or more phases of line current supplied to the motor 810 by an attached cord, or in alternate embodiments the motor 810 may be powered from a DC battery installed on the portable tool 800. The operation of the motor 810 and ultimately the rotation of the cutting blade 830 may be controlled by a trigger mounted on the housing 802 or on a handle, discussed below. In some embodiments, the trigger includes an interlock that substantially prevents inadvertent operation of the saw 800. A handle may be provided on the housing 802 (similar in operation and configuration to handle 580 shown in FIG. 23 discussed above) to allow the user to move and operate the tool 800 with a single hand.

The motor 810 is aligned within the housing 802 such that an axis of rotation P of the motor shaft 812 is substantially parallel to an axis of rotation Q of the cutting blade 830. In other embodiments, the motor 810 may be disposed within the housing 802 such that the axis of rotation P of the motor shaft 812 is substantially perpendicular or at an oblique angle with respect to the axis of rotation Q of the cutting blade 830.

In embodiments where the motor shaft 812 is parallel to the cutting shaft 818, the transmission 814 between the two shafts may be a pinion gear 815 defined on the motor shaft 812 and a meshed spur gear 816 attached to the output shaft 818 as shown in FIG. 25, or the transmission 814 may be a meshed set of spur gears, or a belt drive, as discussed in the embodiments above, which allows the motor and cutting shafts 812, 818 to rotate at different speeds. In embodiments where the motor shaft 812 is perpendicular or at another oblique angle with respect to the cutting shaft 818, the transmission member 814 may be a set of substantially perpendicular bevel gears, hypoid gears, or worm gears that allow for both the change in direction of the torque from the motor shaft 812 to the output shaft 818 and additionally a change in rotational speed of the output shaft 818 from the speed of the motor shaft 812.

The cutting blade 830 is substantially enclosed within a blade guard 850 that encloses a majority of the circumferential edge of the cutting blade 830 and provides a physical barrier from a user inadvertently contacting the upper and side portions of the rotating cutting blade 830. The blade guard 850 further provides an enclosure, or plenum 853 to retain a significant portion of the dust and debris created while cutting a workpiece or substrate within the blade guard 850 and the housing 802 and therefore prevent the same dust and debris from being expelled radially from the cutting blade 830 to the environment.

The blade guard 850 additionally includes a port defined in the blade guard 850 that is connected to a conduit 860 that provides fluid communication between the plenum 853 and the first volute 840a and first set of blades 841 of the impeller 840, described below. The port and suction end of the conduit 860 may be disposed proximate the leading edge of the cutting blade 830, or at other locations within the blade guard 850. In some embodiments, a second port may be defined in the blade guard 850 and connected to a second conduit that is fluidly connected to the impeller 840, which may be disposed proximate a trailing edge of the cutting blade 830 or at other locations of the blade guard 850. Embodiments with two or more ports and two or more conduits are similar to the structure shown in FIG. 25 and described above.

In some embodiments, a lower blade guard may be provided that is movably mounted to the upper blade guard 850 or other portions of the housing 802 to substantially fully enclose the circumference of the cutting blade 830 to prevent inadvertent contact with the cutting blade 830. The lower blade guard may be similar to lower blade guard 552 described and shown in the embodiment above.

An impeller 840 is rotatably driven by the motor shaft 812. As shown in FIG. 25, the impeller 840 may be mounted to the end of the motor shaft 812 that also includes the transmission 814. In other embodiments, the impeller 840 may be mounted to the opposite end of the motor shaft 812 from the end connected to the transmission 814. In still other embodiments, the impeller 840 may be mounted to the output shaft 818, in a manner similar to that of the impeller 540 described above.

The impeller 840 is configured to establish two independent air flow paths through the tool, a first path M urging and directing air and dust and debris created by the cutting blade 830 when cutting a substrate to the impeller 840. The first path M extends from the blade housing 850 through the conduit 860 (or multiple conduits as discussed above) to the impeller 840 and then subsequently directs air discharged from the impeller 840 through a discharge port 843 on the housing 802. A second flow path N provided by the impeller 840 provides a flow of cooling air across the motor 810 to the impeller 840 and ultimately discharges the cooling air through an output vent 808 defined in the housing 802. Air flowing across the motor 810 enters through an input vent 807 defined on the housing 802, preferably disposed on the opposite side of the motor 810 from the impeller 840. Air leaving the impeller 840 (after flowing past the motor 810) ultimately flows out of the housing through the output vent 808 defined in the housing 802.

The impeller 840 is formed with a first set of blades 841 and a second set of blades 846, and a first volute 840a that provides fluid communication to the first set of blades 841 and a second volute 845 that provides fluid communication to the second set of blades 846. Each of the first and second sets of blades 841, 846 are disposed on opposite sides of the impeller 840, such that the first set of blades 841 and the first volute 840a receive air, dust, and debris that flows along path M from the plenum 853 and through the conduit 860, and the second set of blades 846 and the second volute 845 receive air that flows along path N past the motor 810.

The impeller 840 includes a ring 847 that extends circumferentially along the outer edge of the impeller 840 and separates the outer edges of the first and second sets of impeller blades 841, 846. The ring 847 rides within a channel 809 defined in the housing 802, which substantially eliminates fluid communication between opposing sides of the impeller 840, thereby substantially preventing the dust and debris entrained within the air flowing along the first flow path M from flowing to the vicinity of the motor 810.

The impeller 840 is rotatably disposed within a fan housing 844 that is attached to or monolithically formed with the housing 802. The cutting blade side of the fan housing 844 is preferably substantially sealed with the housing 802 to prevent air (or foreign particulate matter) from outside of the housing 802 from being drawn within the cutting blade side of the fan housing 844 and through a volute 840a of the impeller 840 without first flowing in the vicinity of the cutting blade 830.

The impeller 840 and fan housing 844 includes a discharge 843 that is aligned substantially perpendicularly to the rotational axis of the impeller 840. The discharge 843 is aligned to receive air, dust, and debris that flows through the first set of blades 841 of the rotating impeller 840 and receives kinetic energy therefrom to ultimately flow tangentially or axially away from the impeller blades 841.

It will now be appreciated that the various preferred embodiments discussed herein provide a number of advantages over the prior art. The disclosed tools may be configured to be lightweight, portable and easily manipulated by a user to cut any number of materials.
Substrates that are prone to generate significant amounts of dust and other airborne particulates, such as concrete board or drywall, granite, ceramics, marble, tile or similar materials can be readily processed by the tool with a minimal amount of such particulates being released to the surrounding atmosphere.

Specific exemplary embodiments of the invention have been given above. These are not intended to limit the scope of use of functionality of the invention, which may also be embodied by the following variant representative embodiments.

In one representative embodiment of the invention a blade guard used in association with a debris evacuation system disposed upon a power tool having a cutting blade. The blade guard includes a generally arcuate body fixed to a housing of the power tool, the body surrounding a portion of the cutting blade. A plenum is provided that is at least partially disposed in concert with the body and fixably disposed thereon. The plenum includes an arcuate portion disposed substantially coaxially with the cutting blade.

In one representative embodiment of the invention a blade guard used in association with a debris evacuation system that is configured to surround a rotatable cutting blade. The blade guard includes an arcuate body mounted to surround a portion of an outer circumferential edge of the cutting blade, wherein the arcuate body is fixed with respect to the rotatable blade. A plenum is disposed upon the body and is configured to provide fluid communication between a cutting zone within the body and a suction source. An aperture is defined in the body proximate the cutting blade, the aperture is disposed proximate a location where the cutting blade exits a workpiece being cut.

In one representative embodiment of the invention a blade guard disposed upon a power tool having a cutting blade comprises a generally arcuate body fixed to a housing of the power tool, the body surrounding a portion of the cutting blade; and a plenum at least partially disposed in concert with the body and fixably disposed thereon, the plenum including an arcuate portion disposed substantially coaxially with the cutting blade.

In one representative embodiment of the invention the plenum comprises two mated clam shell halves.

In one representative embodiment of the invention the two clam shell halves include a portion that encloses a portion of a circumferential edge of the cutting blade.

In one representative embodiment of the invention the clam shell halves mate at a first edge proximate a top portion of the plenum, and a second edge proximate a bottom portion of the plenum.

In one representative embodiment of the invention the blade guard further comprises an aperture defined in the second edge.

In one representative embodiment of the invention the aperture is defined in apportion of the second edge where the two clam shell halves do not make contact proximate the cutting blade.

In one representative embodiment of the invention the aperture defined proximate a location where a leading edge of the cutting blade exits a work piece during operation.

In one representative embodiment of the invention the aperture is defined proximate a leading edge of the cutting blade.

In one representative embodiment of the invention a portion of the cutting blade extends through the aperture and into the plenum.

In one representative embodiment of the invention the cutting blade extends through the aperture as it passes upward through a slot in a base plate.

In one representative embodiment of the invention the aperture is disposed above a base plate of the housing.

In one representative embodiment of the invention the tangent line aligned with an outer circumferential edge of the cutting blade at a point of normal contact with a workpiece extends through the aperture and into the plenum.

In one representative embodiment of the invention the plenum includes an extended portion fluidly connected to the arcuate portion, wherein the extended portion is configured to establish fluid communication with a suction source.

In one representative embodiment of the invention the blade guard further comprises a second arcuate body movably disposed upon the body, the second body biased to surround a second portion of the cutting blade.

In one representative embodiment of the invention the second body is movable to a retracted position that exposes a portion of the cutting blade extending below a base plate of the housing.

In one representative embodiment of the invention the a blade guard configured to surround a rotatable cutting blade comprises an arcuate body mounted to surround a portion of an outer circumferential edge of the cutting blade, wherein the arcuate body is fixed with respect to the rotatable blade; a plenum disposed upon the body and configured to provide fluid communication between a cutting zone within the body and a suction source; and an aperture defined in the body proximate the cutting blade, the aperture disposed proximate a location where the cutting blade exits a workpiece being cut.

In one representative embodiment of the invention the aperture is disposed such that a portion of the outer circumferential edge of the cutting blade extends through the aperture and into the plenum.

In one representative embodiment of the invention the cutting blade is rotatable with respect to the body such that the portion of the outer circumferential edge of the cutting blade extending through the aperture continuously changes as the cutting blade rotates.

In one representative embodiment of the invention the plenum includes an arcuate portion that is coaxially mounted with respect to the cutting blade.

In one representative embodiment of the invention the plenum comprises an inner portion that surrounds a portion of the outer circumferential edge of the cutting blade, and the aperture is defined by the absence of the inner portion of the plenum proximate the cutting blade.

## Claims

1. A blade guard disposed upon a power tool having a cutting blade comprising:
a generally arcuate body fixed to a housing of the power tool, the body surrounding a portion of the cutting blade; and
a plenum at least partially disposed in concert with the body and fixably disposed thereon, the plenum including an arcuate portion disposed substantially coaxially with the cutting blade.

2. The blade guard of claim 1, wherein the plenum comprises two mated clam shell halves.

3. The blade guard of claim 2, wherein the two clam shell halves include a portion that encloses a portion of a circumferential edge of the cutting blade.

4. The blade guard of claim 2, wherein the clam shell halves mate at a first edge proximate a top portion of the plenum, and a second edge proximate a bottom portion of the plenum.

5. The blade guard of claim 4, further comprising an aperture defined in the second edge.

6. The blade guard of claim 5, wherein the aperture is defined in apportion of the second edge where the two clam shell halves do not make contact proximate the cutting blade.

7. The blade guard of claim 6, wherein the aperture defined proximate a location where a leading edge of the cutting blade exits a work piece during operation.

8. The blade guard of claim 6, wherein the aperture is defined proximate a leading edge of the cutting blade.

9. The blade guard of any one of claims 5 to 8, wherein a portion of the cutting blade extends through the aperture and into the plenum.

10. The blade guard of claim 9, wherein the cutting blade extends through the aperture as it passes upward through a slot in a base plate.

11. The blade guard of any one of claims 5 to 10, wherein the aperture is disposed above a base plate of the housing.

12. The blade guard of any one of claims 5 to 11, wherein a tangent line aligned with an outer circumferential edge of the cutting blade at a point of normal contact with a workpiece extends through the aperture and into the plenum.

13. The blade guard of any preceding claim, wherein the plenum includes an extended portion fluidly connected to the arcuate portion, wherein the extended portion is configured to establish fluid communication with a suction source.

14. The blade guard of any preceding claim, further comprising a second arcuate body movably disposed upon the body, the second body biased to surround a second portion of the cutting blade.

15. The blade guard of claim 14, wherein the second body is movable to a retracted position that exposes a portion of the cutting blade extending below a base plate of the housing.
